(19) **Europäisches Patentamt / European Patent Office / Office européen des brevets**

(11) **EP 4 779 587 A1**

(12) **EUROPEAN PATENT APPLICATION**
published in accordance with Art. 153(4) EPC

(43) Date of publication:
**22.07.2026 Bulletin 2026/30**

(21) Application number: **24864656.4**

(22) Date of filing: **11.09.2024**

(51) International Patent Classification (IPC):
*G06V 20/40* (2022.01)

(52) Cooperative Patent Classification (CPC):
G06V 20/40

(86) International application number:
**PCT/CN2024/118264**

(87) International publication number:
**WO 2025/055940 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 11.09.2023 CN 202311168705
11.09.2023 CN 202311166863
11.09.2023 CN 202311166948
11.09.2023 CN 202311166954
11.09.2023 CN 202311168754
11.09.2023 CN 202311168733
11.09.2023 CN 202311168722
11.09.2023 CN 202311165220
11.09.2023 CN 202311168718
25.10.2023 CN 202311387975

(71) Applicants:
• **China Petroleum & Chemical Corporation Beijing 100728 (CN)**
• **Sinopec Research Institute of Safety Engineering Co., Ltd. Qingdao, Shandong 266104 (CN)**
• **Sinopec National Petrochemical Project Risk Assessment Technical Center Co., Ltd. Qingdao, Shandong 266104 (CN)**

(72) Inventors:
• **LIN, Yujie**
  **Qingdao, Shandong 266104 (CN)**
• **MU, Yuntao**
  **Qingdao, Shandong 266104 (CN)**
• **ZHANG, Guangwen**
  **Qingdao, Shandong 266104 (CN)**
• **ZHAO, Xiangdi**
  **Qingdao, Shandong 266104 (CN)**
• **YU, Anfeng**
  **Qingdao, Shandong 266104 (CN)**
• **GE, Chuntao**
  **Qingdao, Shandong 266104 (CN)**
• **LU, Wei**
  **Qingdao, Shandong 266104 (CN)**
• **ZHENG, Yi**
  **Qingdao, Shandong 266104 (CN)**
• **LIU, Xinze**
  **Qingdao, Shandong 266104 (CN)**
• **KUANG, Chen**
  **Qingdao, Shandong 266104 (CN)**

(74) Representative: **karo IP**
**Patentanwälte PartG mbB**
**Steinstraße 16-18**
**40212 Düsseldorf (DE)**

(54) **SELF-ADAPTIVE FLAME MONITORING METHOD AND SYSTEM FOR INDUSTRIAL AREA**

(57) A self-adaptive flame monitoring method and system for an industrial area. The method comprises: in response to an initialization request signal, performing system initialization, and determining a flame monitoring scene on the basis of the system initialization result (S10); selecting a corresponding flame monitoring solution on the basis of the flame monitoring scene (S20); executing the flame monitoring solution, collecting a scene image in the flame monitoring scene, and identifying flame features on the basis of the scene image (S30); and on the basis of the identified flame features, performing early warning triggering condition determination, and executing a corresponding early warning solution on the basis of a triggered early warning triggering condition (S40).

EP 4 779 587 A1

S10

In response to an initialization request signal, perform system initialization, and determine a flame monitoring scene on the basis of the system initialization result

S20

Select a corresponding flame monitoring solution on the basis of the flame monitoring scene

S30

Execute the flame monitoring solution, collect a scene image in the flame monitoring scene, and identify flame features on the basis of the scene image

S40

On the basis of the identified flame features, perform early warning triggering conditiondeterminnation, and execute a corresponding early warning solution on the basis of a triggered early warning triggering condition

**FIG. 1**

## Description

### Field of the Invention

The present disclosure relates to the technical field of flame monitoring, in particular to a self-adaptive flame monitoring method and system for an industrial area.

### Background of the Invention

There are numerous hazardous factors during production, storage, transportation, etc. of petrochemical enterprises, and in particular, the raw materials, intermediate products, final products, etc. are mostly flammable and explosive hazardous chemicals. Once they leak and form explosive mixtures, they will explode when exposed to open flames, thereby causing fire accidents. Therefore, fire monitoring is necessary in industrial areas, particularly in chemical areas, and timely and accurate identification of fire development can ensure safe and stable operation in the chemical areas.

In the chemical areas, there is also a great demand for industrial fire monitoring in addition to fire flames, such as furnace flame monitoring of refining and chemical heating furnaces. It is necessary to monitor the combustion status of these industrial fires to monitor the operating status of corresponding equipment.

It can be seen that in the chemical areas, for both fire monitoring in open space scenes and industrial fire monitoring in confined space scenes such as refining and chemical heating furnaces, there is a large demand for flame monitoring. However, a petrochemical plant area is not only extremely complex in scenes, but also the forms and types of flames produced in different scenes are different. Relying solely on the existing flame recognition algorithm has various problems such as a single identification means and multiple interference factors, so the accuracy is difficult to guarantee. And in order to cope with different flame monitoring demands, the existing solutions require the development and configuration of a corresponding flame monitoring algorithm for each monitoring scene. Both algorithm management and later operation and maintenance need to waste a lot of management resources. In view of the problems of the lack of an integrated flame monitoring solution in the chemical areas and low accuracy of flame monitoring in various scenes in the existing solutions, it is necessary to create a new flame monitoring solution suitable for the chemical areas.

### Summary of the Invention

An object of an embodiment of the present disclosure is to provide a self-adaptive flame monitoring method and system for an industrial area to at least solve the problems of the lack of an integrated flame monitoring solution in chemical areas and low accuracy of flame monitoring in various scenes in the existing solutions.

In order to achieve the above object, a first aspect of the present disclosure provides a self-adaptive flame monitoring method for an industrial area, including: collecting a scene image in a flame monitoring scene, and identifying flame features based on a flame monitoring solution corresponding to a current flame scene; and determining early warning triggering conditions based on the identified flame features, and executing a corresponding early warning solution based on a triggered early warning triggering condition, wherein when the flame monitoring scene is an open space monitoring scene, false alarm screening is performed on part of the identification results of adaptive screening based on differences in flame features of a plurality of frames of images before determining the early warning triggering conditions.

Optionally, before identifying the flame features based on the flame monitoring solution corresponding to the current flame scene, the method further comprises:

performing system initialization, comprising: acquiring information of a scene in which an image collection device is located, wherein the information of the scene comprises one or more of field-of-view information of the image collection device, temperature information of the scene, object characteristic information within the scene, and scene information entered by a user; performing system initialization based on the information of the scene, and determining the flame monitoring scene; and

selecting, based on the flame monitoring scene, the corresponding flame monitoring solution, comprising: determining that a current flame monitoring solution is a fire monitoring solution in the case where the flame monitoring scene is an open space monitoring scene; and determining that the current flame monitoring solution is a furnace flame status monitoring solution in the case where the flame monitoring scene is a confined space monitoring scene.

Optionally, when the current flame monitoring solution is the fire monitoring solution, the scene image comprises video image information and infrared image information. The method further comprises training a fire identification model, comprising:

acquiring historical video information containing a fire scene, and performing frame extraction on the historical video information, and taking image information after the frame extraction as an initial sample set;

preprocessing each image in the initial sample set, and performing flame feature labeling after the preprocessing to obtain a labeled sample set;

performing data enhancement processing on the labeled sample set, and splitting the labeled sample set after the data enhancement into a training set and a validation set;

performing model training based on the training set and a selected image recognition algorithm to obtain an initial model; and

verifying the initial model based on the verification set, and using the verified model as the fire identification model.

Optionally, before identifying the flame features based on the scene image, the method further comprises: determining an image recognition algorithm for the flame features of the scene image based on a selected flame monitoring solution, wherein the image recognition algorithm comprises one or more of a maximum between-class variance method, a Boolean variable method, R-CNN, Fast R-CNN, faster R-CNN, mask R-CNN, YOLO v4, YOLO v5, YOLO v7, YOLO v8, and SSD.

Optionally, acquiring the identified flame features based on the scene image comprises: performing frame extraction on the video image information to obtain a plurality of image frames to form an image set; and taking the image set as input parameters for a pre-trained fire identification model, and performing model training to obtain the flame features, wherein the flame features comprise one or more of a flame location, a flame size, a flame color, and a smoke feature.

Optionally, determining the early warning triggering conditions based on the identified flame features comprises:

determining that a first fire condition is triggered in the case where there are recognizable flame features;

determining that a second fire condition is triggered in the case where the flame features meet preset fire flame features, wherein the fire flame features comprise a coupling feature of one or more of a flame size feature, a flame location feature, a flame color feature, and a smoke feature;

determining that a third fire condition is triggered in the case where the infrared image information identifies the flame features;

determining that a fire early warning triggering condition is met when the first fire condition, the second fire condition and the third fire condition are triggered simultaneously; and

pushing scene image information to a user end when the second fire condition is triggered and the third fire condition is not triggered, or the second fire condition is not triggered and the third fire condition is triggered when determining that the first fire condition is triggered, and determining whether the fire early warning triggering condition is met based on user confirmation information.

Optionally, performing false alarm screening on part of identification results of adaptive screening based on differences in flame features of the plurality of frames of images comprises:

identifying a suspected misjudgment image in image information that meets the fire early warning triggering condition within a predetermined period to form a suspected misjudgment image set;

performing false alarm screening on the image information in the misjudgment image set one by one, wherein false alarm types comprise one or more of static false alarm, dynamic rule movement false alarm, and minimal fuzzy false alarm; and

performing each preset false alarm type screening rule in sequence, performing false alarm screening on each suspected misjudgment image, outputting image information after false alarm screening, and repeatedly determining the early warning triggering condition based on the image information after the false alarm screening, wherein the preset false alarm type screening rules comprise one or more of a static false alarm screening rule, a dynamic rule movement false alarm screening rule and a minimal fuzzy false alarm screening rule.

Optionally, the static false alarm screening rule comprises:

extracting other image frames of the misjudgment images within the predetermined period, together with a current misjudgment image to form a misjudgment and research and judgment set; and

identifying an inter-frame drift amount between adjacent image frames in the misjudgment and research and judgment set, and comparing the inter-frame drift amount with a preset inter-frame drift threshold, and in the case where an inter-frame drift amount between consecutive n adjacent image frames is less than the preset inter-frame drift threshold, determining that there is a static false alarm for the current misjudgment image, and false alarm screening needs to be performed, wherein the inter-frame drift amount is a maximum offset of a recognition box, an offset of a center point of the recognition box or an offset of a centroid of a segmented target.

Optionally, the dynamic rule movement false alarm screening rule comprises:

extracting other image frames of the misjudgment images within the predetermined period, together with a current misjudgment image to form a misjudgment and research and judgment set; and
identifying a recognition box area relationship value between adjacent image frames in the misjudgment and research and judgment set, and comparing the recognition box area relationship value with a preset recognition box area relationship value threshold, and in the case where a recognition box area relationship value between consecutive n adjacent image frames is less than the recognition box area relationship value, determining that there is dynamic rule movement false alarm for the current misjudgment image, and false alarm screening needs to be performed, wherein the recognition box area relationship value is a recognition box area difference value or a recognition box area ratio value.

Optionally, the minimal fuzzy false alarm screening rule comprises:

extracting other image frames of the misjudgment images within the predetermined period, together with a current misjudgment image to form a misjudgment and research and judgment set; and
identifying a recognition box area value for each image frame in the misjudgment and research and judgment set, and comparing the recognition box area value for each image frame with a preset pixel area limitation threshold of a recognition box, and in the case where the recognition box area values of consecutive n image frames are less than the preset pixel area limitation threshold of the recognition box, determining that there is minimal fuzzy false alarm for the current misjudgment image, and false alarm screening needs to be performed.

Optionally, when the current flame monitoring solution is the furnace flame status monitoring solution, the scene image comprises flame video image information and/or infrared image information of each furnace nozzle. Acquiring the identified flame features based on the scene image comprises: identifying flame video image and/or infrared image information of each furnace nozzle by utilizing a plurality of image recognition algorithms to obtain a flame morphology identification result corresponding to each furnace nozzle; and using the flame morphology identification result corresponding to each furnace nozzle as the identified flame features.
Optionally, identifying the flame video image and/or infrared image information of each furnace nozzle by utilizing the plurality of image recognition algorithms to obtain the flame morphology identification result corresponding to each furnace nozzle comprises:

acquiring a plurality of frames of images in an actual combustion process inside a heating furnace, wherein the plurality of frames of images are obtained by decompressing video information in the actual combustion process inside the heating furnace;
for each frame of image, using different image recognition algorithms to respectively identify the frame of image, obtaining a flame morphology of each frame of image under each image recognition algorithm, and determining feature parameters of a flame morphology under each image recognition algorithm based on the flame morphology of each frame of image under each image recognition algorithm; and
performing flame morphology correction based on feature parameters of the flame morphology under each image recognition algorithm to obtain a corrected flame morphology.

Optionally, wherein performing flame morphology correction based on feature parameters of the flame morphology under each image recognition algorithm to obtain the corrected flame morphology, comprising:

determining a flame morphology error value based on feature parameters of the flame morphology under the maximum between-class variance method and feature parameters of the flame morphology under the Boolean variable method;
in the case where the flame morphology error value is less than a preset error threshold, taking the flame morphology under the Boolean variable method as the corrected flame morphology;
otherwise, performing flame morphology recognition again based on the maximum between-class variance method and the Boolean variable method until the flame morphology error value of both is less than the preset error threshold, wherein, the feature parameters of the flame morphology comprise: a flame height, a flame width, a flame area, a flame color, a flame pulsation frequency and a flame inclination; and
wherein, the early warning triggering conditions comprise: a furnace nozzle extinguishing early warning condition, a furnace nozzle burning efficiency early warning condition and a furnace nozzle abnormal burning early warning condition.

Optionally, a trigger rule for the furnace nozzle extinguishing early warning condition comprises:

acquiring image information simultaneously transmitted back by the image collection devices of the same furnace nozzle at different viewing angles;

determining whether there are the flame features for the corresponding furnace nozzle based on the image information simultaneously transmitted back by the image collection devices to obtain a plurality of flame morphology identification results;

in the case where the plurality of flame morphology identification results are all that the furnace nozzle is extinguished, determining that the result is that the furnace nozzle is extinguished;

in the case where the plurality of flame morphology identification results are all that the furnace nozzle is not extinguished, determining that the result is that the furnace nozzle is not extinguished;

in the case where the plurality of flame morphology identification results are not consistent, determining the plurality of flame morphology identification results to identify an abnormal flame morphology identification result and a non-abnormal flame morphology identification result;

determining whether the furnace nozzle is extinguished according to the abnormal flame morphology identification result and the non-abnormal flame morphology identification result; and

traversing all the furnace nozzles to obtain the extinguishing situation of each furnace nozzle, and in the case where the number of extinguished furnace nozzles is greater than a preset number threshold of extinguished furnace nozzles, determining that the furnace nozzle extinguishing early warning condition is triggered.

Optionally, a trigger rule for the furnace nozzle burning efficiency early warning condition comprises:

identifying an actual flame area and an actual combustion area based on the flame area;

calculating the flame combustion efficiency according to the actual flame area and the actual combustion area; and

determining that the furnace nozzle burning efficiency early warning condition is triggered when the flame combustion efficiency is lower than the expected combustion efficiency.

Optionally, calculating the flame combustion efficiency according to the actual flame area and the actual combustion area comprises:

acquiring combustion parameters of a target heating furnace;

calculating a furnace characteristic parameter $\pi_f$ and an air characteristic parameter $\pi_a$ according to the combustion parameters;

calculating a flame combustion area of the target heating furnace at a combustion efficiency of 100% according to the combustion parameters, the furnace characteristic parameter $\pi_f$ and the air characteristic parameter $\pi_a$;

obtaining a normal combustion area of the target heating furnace based on the flame combustion area;

determining the overall combustion efficiency based on a ratio of the actual flame area to the normal combustion area;

determining the combustion efficiency based on a ratio of the actual combustion area to the normal combustion area; and

taking the overall combustion efficiency and the combustion efficiency as the flame combustion efficiency.

Optionally, a trigger rule for the furnace nozzle abnormal burning early warning condition comprises:

respectively determining error values between the flame width, the flame area, the flame pulsation frequency, the flame color and the flame inclination and corresponding preset parameters;

determining whether there is an abnormality in each comparison relationship based on each error value and a preset error threshold under the corresponding comparison relationship; and

determining that the furnace nozzle abnormal burning early warning condition is triggered when the number of comparison relationships in which abnormalities exist is greater than a preset number of comparison relationships.

Optionally, the early warning triggering conditions comprise:

a fire early warning triggering condition in the open space monitoring scene; and

a furnace nozzle extinguishing early warning condition, a furnace nozzle burning efficiency early warning condition and a furnace nozzle abnormal burning early warning condition in the confined space monitoring scene; and

executing the corresponding early warning solution based on the triggered early warning triggering condition comprises:

in the case where the triggered early warning triggering condition is the fire early warning triggering condition, performing a fire extinguishing operation in conjunction with a fire water sprinkler system being started while outputting a fire alarm signal; and

in the case where the triggered early warning triggering condition is the furnace nozzle extinguishing early warning condition, the furnace nozzle burning efficiency early warning condition or the furnace nozzle abnormal burning early warning condition, pushing corresponding early warning information and a regulatory scheme to a preset regulatory end.

Optionally, in the confined space monitoring scene, the method further comprises:

generating a self-check signal in the case where a feature value of the collected scene image is not equal to a preset value;

sending the self-check signal to a feature adjustment unit to make the feature adjustment unit enter a self-check state, and adjusting a feature value of a flame self-check image until the feature value is equal to the preset value;

generating an adjustment completion signal after the feature value of the flame self-check image is adjusted to the preset value; and

sending the adjustment completion signal to the feature adjustment unit to cause the feature adjustment unit to enter a self-check completion status.

Optionally, the method further comprising:

retaining historical early warning information, comprising:

anchoring an abnormal image of image information determined to be the historical early warning information in an image sequence;

positioning a specific abnormal position of a device in the anchored abnormal image, and slicing the abnormal image based on an abnormal position positioning result to obtain a plurality of sub-images; and

filtering background sub-images from the plurality of sub-images, taking the remaining sub-images as effective images, and storing the effective images into a preset image library; and

in response to an access signal of the preset image library, pushing the effective images based on an access target.

Optionally, during image collection, the method further comprises:

acquiring real-time image information of flames in target areas, and performing abnormality probability evaluation of flames states in the target areas based on the image information;

locating target areas in which the abnormality probability is evaluated to be greater than a preset threshold to form an abnormal target area set;

generating an attitude adjustment scheme for an array of image monitoring devices based on locations of the abnormal target areas in the abnormal target area set; and

performing the attitude adjustment scheme to perform attitude adjustment of each image monitoring device in the array of the image monitoring devices.

A second aspect of the present disclosure provides a self-adaptive flame monitoring system for an industrial area, including: a feature recognition unit, configured to collect a scene image in a flame monitoring scene, and identify flame features based on a flame monitoring solution corresponding to a current flame scene; and an early warning unit, configured to determine early warning triggering conditions based on the identified flame features, and execute a corresponding early warning solution based on a triggered early warning triggering condition, when the flame monitoring scene is an open space monitoring scene, false alarm screening is performed on part of the identification results of adaptive screening based on differences in flame features of a plurality of frames of images before determining the early warning triggering conditions.

Optionally, the system further comprises:

a self-check unit, comprising a camera and a feature adjustment unit, wherein, the camera comprises:

an acquisition module, configured to acquire a flame self-check image of a furnace;

a first generating module, configured to generate a self-check signal in the case where it is determined that a feature value of the flame self-check image is not equal to a preset value;

a first sending module, configured to send the self-check signal to the feature adjustment unit to make the feature adjustment unit enter a self-check state, and adjust the feature value of the flame self-check image until the feature value is equal to the preset value;

a second generating module, configured to generate an adjustment completion signal after the feature value of the flame self-check image is adjusted to the preset value; and

a second sending module, configured to send the adjustment completion signal to the feature adjustment unit to cause the feature adjustment unit to enter a self-check completion status.

Optionally, the feature adjustment unit comprises:

a baffle, configured to block a lens of the camera to adjust the feature value of the flame self-check image collected by the camera;

a controller, configured to receive the self-check signal and the adjustment completion signal, generate a first control instruction according to the self-check signal and generate a second control instruction according to the adjustment completion signal; and

an actuator, installed on an outer side wall of the camera, and configured to receive the first control instruction and the second control instruction which are issued by the controller, control the baffle to turn over from an initial position onto a surface of the lens of the camera according to the first control instruction, and control the baffle to turn over from the surface of the lens of the camera to the initial position according to the second control instruction.

A third aspect of the present disclosure provides a computer-readable storage medium, having stored thereon instructions that, when run on a computer, cause the computer to perform the self-adaptive flame monitoring method for an industrial area.

A fourth aspect of the present disclosure provides an electronic device, including a processor and a memory, wherein the memory stores machine-readable instructions that can be executed by the processor, and the machine-readable instructions, when executed by the processor, implement the self-adaptive flame monitoring method for an industrial area described above.

By the above technical solution, the self-adaptive flame monitoring method for an industrial area proposed in the solution of the present disclosure proposes a corresponding system initialization solution, and by acquiring image information of a current scene, performing scene adaptive recognition through a feature recognition solution, and calling a corresponding monitoring algorithm based on an identification result, the requirement of integrated flame monitoring in the chemical areas is realized. In various scenes, a flame state is identified through flame feature extraction, and it is determined whether there is a situation of abnormal combustion based on the flame state, corresponding early warning information under each scene is triggered in the abnormal situation, and precise monitoring of the flame under each scene is realized.

Other features and advantages of the embodiments of the present disclosure will be described in detail in the subsequent Detailed Description.

**Brief Description of Drawings**

The accompanying drawings are used to provide a further understanding of the embodiments of the present disclosure and constitute a part of this specification and together with the detailed description below serve to explain the embodiments of the present disclosure, but are not to be construed as limiting the embodiments of the present disclosure. In the drawings:

FIG. 1 is a flowchart illustrating the steps of a self-adaptive flame monitoring method for an industrial area according to an embodiment of the present disclosure;

FIG. 2 is a schematic flowchart of false alarm screening according to an embodiment of the present disclosure;

FIG. 3 is a system structure diagram of a self-adaptive flame monitoring system for an industrial area according to an embodiment of the present disclosure;

FIG. 4 is a schematic diagram of an intermediate state position of a baffle of a self-test system according to an embodiment of the present disclosure;

FIG. 5 is a schematic diagram of an assembly structure of a slider and a support rod according to an embodiment of the present disclosure; and

FIG. 6 is a schematic diagram of a structural assembly of the self-test system according to an embodiment of the present disclosure.

**Description of reference signs**

1-camera; 2-baffle; 3-support rod; 4-sliding groove; 5-slider; 6-push rod; 7-mounting chamber; 8-driven gear; 9-driving gear; 10-rubber pad; and 11-protrusion.

**Detailed Description of the Embodiments**

The specific embodiments of the present disclosure will be described below in detail with reference to the accompanying drawings. It should be understood that the specific embodiments described herein are merely illustrative and explanatory of the present disclosure, and are not intended to limit the present disclosure.

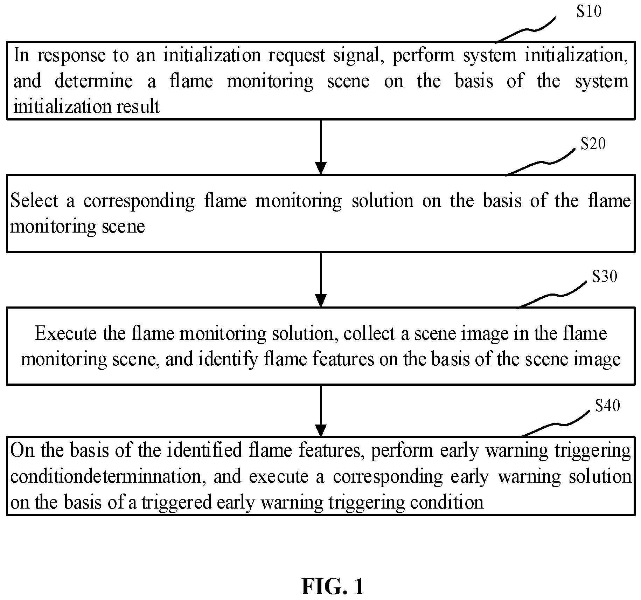

FIG. 1 is a method flowchart of a self-adaptive flame monitoring method for an industrial area according to an embodiment of the present disclosure. As shown in FIG. 1, an embodiment of the present disclosure provides a self-adaptive flame monitoring method for an industrial area, including:

Step S10: in response to an initialization request signal, perform system initialization, and determine a flame monitoring scene on the basis of the system initialization result.

In particular, in chemical areas, there are diverse flame monitoring demands, there are different flame features for different flame types, flame positions, flame functions, etc.. To achieve adaptive flame recognition in different flame monitoring scenes, the system needs to have corresponding flame scene recognition capabilities.

Preferably, the rules for system initialization are as follows: information of a scene in which an image collection device is located is acquired, wherein the information of the scene includes one or more of field-of-view information of the image collection device, temperature information of the scene, object characteristic information within the scene, and scene information entered by a user; and system initialization is performed based on the information of the scene, and the flame monitoring scene is determined.

In the embodiments of the present disclosure, there are unique scene characteristics in the corresponding flame monitoring scene. For example, in a closed monitoring scene, there is unique information of a furnace, such as closed lighting scene information and furnace nozzle characteristic information. For another example, in a tower fire scene, there will be corresponding tower-like features. In the solution of the present disclosure, scene type recognition is performed by identifying scene feature information in a scene image to determine whether an identified object is fire flame features in an open scene or industrial fire flame features in various industrial closed scenes.

Preferably, in addition to performing scene type recognition based on the scene feature information in the scene image, scene recognition is also performed based on other coupled features in the solution of the present disclosure. Because of single scene image recognition, there may be a problem that the recognition accuracy is not high, and if the scene is misidentified, the accuracy of subsequent flame monitoring cannot be guaranteed. For example, the temperature change in a furnace scene is faster than the temperature change in the open scene, temperature information from a temperature sensor can be coupled for scene-assisted recognition. Of course, a user can also determine the monitoring scene by means of manual configuration to ensure the accuracy of scene recognition.

Preferably, in order to further ensure the flame monitoring accuracy, in the solution of the present disclosure, flame monitoring types are pre-distinguished based on identified flame monitoring scenes. For example, also in the open scene, a torch fire is a normal industrial fire, and if the monitoring content is directly determined based on the scene type, it is possible to identify the normal industrial fire as a fire flame, leading to false fire alarm. Based on this, in the solution of the present disclosure, monitoring index primary screening will be performed based on flame monitoring scene distinguishment results, further subdividing the monitoring scenes, wherein an open monitoring scene includes: one or more of a refining and chemical plant tower fire scene, a steel frame fire scene, a ladder climbing fire scene, a pipe gallery fire scene, a tower fire scene, a vertical tank fire scene, a horizontal scene, a reactor fire scene, a tank true fire scene, a heat exchanger fire scene, a machine pump fire scene, a cable bridge true fire scene, a spherical tank fire scene, a storage tank fire scene, a process pipeline fire accident scene, an electrical fire accident scene, a hazardous chemical transportation tanker leakage fire scene, a gas station fire scene, and a torch fire scene.

In the embodiments of the present disclosure, after the flame monitoring scene corresponding to each monitoring device is identified, it will be determined whether a target flame is an industrial fire or an abnormal fire, so as to determine whether a monitoring target is flame state monitoring or fire monitoring, avoiding false alarms.

Preferably, selecting the corresponding flame monitoring solution based on the flame monitoring scene includes: determining a flame monitoring category based on the flame monitoring scene, and selecting the corresponding flame monitoring solution based on the flame monitoring category. Wherein, the flame monitoring category includes: a fire detection category and an industrial fire monitoring category. The flame monitoring solution includes a fire monitoring solution and an industrial fire monitoring solution.

Step S20: select a corresponding flame monitoring solution on the basis of the flame monitoring scene.

Specifically, if the flame monitoring scene is an open space monitoring scene, it is determined that a current flame monitoring solution is a fire monitoring solution; and if the flame monitoring scene is a confined space monitoring scene, it is determined that the current flame monitoring solution is a furnace flame status monitoring solution.

Step S30: execute the flame monitoring solution, collect a scene image in the flame monitoring scene, and identify flame features on the basis of the scene image. Wherein, when the flame monitoring scene is the open space monitoring scene, false alarm screening is performed on part of identification results of adaptive screening based on differences in flame features of a plurality of frames of images before determining early warning triggering conditions.

In particular, when the current flame monitoring solution is the fire monitoring solution, the scene image includes video image information and infrared image information.

In the embodiments of the present disclosure, the solution of the present disclosure combines both means of infrared temperature measurement recognition with visible light video recognition to construct a fused recognition detection technology based on dual spectra, which can effectively solve the problems of single recognition means and multiple interference factors due to solely relying on the visible light video detection technology, and lay a foundation for rapid recognition and early warning response of flames in complex petrochemical scenes.

Preferably, before identifying the flame features based on the scene image, the method further includes: determining an image recognition algorithm for the flame features of the scene image based on a selected flame monitoring solution, wherein the image recognition algorithm includes one or more of a maximum between-class variance method, a Boolean variable method, R-CNN, Fast R-CNN, faster R-CNN, mask R-CNN, YOLO v4, YOLO v5, YOLO v7, YOLO v8, and SSD.

Preferably, acquiring the identified flame features based on the scene image includes: performing frame extraction on the video image information to obtain a plurality of image frames to form an image set; taking the image set as input parameters for a pre-trained fire identification model, and performing model training to obtain the flame features, wherein the flame features include one or more of a flame location, a flame size, a flame color, and a smoke feature.

Embodiment 1:

Videos of massive flames in complex scenes of petrochemical enterprises are acquired, covering various flame forms of various fire accidents in the petrochemical industry, including spill fire, liquid pool fire, spray fire, tank fire, can fire, hydrogen combustion fire, electric fire, pipe gallery shielding fire and other flames, and the specific form classification can be further refined and expanded on the basis of the above classification. The collected videos of the flames should cover the scene conditions of various plant areas of different petrochemical enterprises as much as possible, and background areas are free of open zones, and have complex structures and partial pipeline obstruction; the video files include two categories of photographing using a visible light camera and photographing using an infrared temperature measurement imager, wherein a video image photographed by the visible light camera is a standard video or high-definition video file with a resolution of not less than 1024*768 pixels; and the infrared temperature measurement imager outputs infrared temperature measurement imaging results with a resolution of not less than 800*600 pixels. The scale of various flame targets in the visible light video should be greater than 20*20 pixels in order to ensure that the model recognition accuracy meets the requirements.

Frame extraction is performed on the acquired files by using video frame extraction tool software. During the frame extraction, a time interval for the video files should be set to be not less than 500 ms/frame, samples extracted from visible light videos are classified in detail based on various forms of flames, and packaged into multiple folders such as spill fire, liquid pool fire, spray fire, tank fire, can fire, hydrogen combustion fire, electric fire, pipe gallery shielding fire and other flames. The number of flame samples for each classification form should not be less than 5000, covering no less than 10 scene conditions, and no more than 100 sample images should be extracted for each scene condition.

Standardized preprocessing of sample images may use image denoising, distortion correction, etc. to make an image scale, a field of view, and a target size the same or as close as possible. Flame targets in the sample images are labeled with an imaging labeling tool LabelImg or other image labeling tools. In the labeling step, a labeled data set format type is first set to YOLO, the labeled sample file format is .txt, and classes corresponding to the flame targets in the sample class file are as follows: spill fire 0, liquid pool fire 1, spray fire 2, tank fire 3, can fire 4, hydrogen combustion fire 5, electric fire 6, pipe gallery shielding fire 7... and so on, and new classifications can be added according to the needs of the enterprises. During infrared thermal imaging recognition and detection, there is only one classification: thermal imaging recognition fire 0. During sample labeling, the coordinates and types of various flame targets in the images are boxed with rectangular labeling boxes, ensuring that the labeling boxes completely cover the flame targets, and that a ratio of an area of each flame target in the labeling box is not less than 1:3.

Preferably, the method further includes: training a fire identification model. The training includes: acquiring historical video information containing a fire scene, and performing frame extraction on the historical video information, and taking image information after the frame extraction as an initial sample set; preprocessing each image in the initial sample set, and performing flame feature labeling after the preprocessing to obtain a labeled sample set; performing data enhancement processing on the labeled sample set, and splitting the labeled sample set after the data enhancement into a training set and a validation set; performing model training based on the training set and a selected image recognition algorithm to obtain an initial model; and verifying the initial model based on the verification set, and using the verified model as the fire identification model.

Preferably, preprocessing each image in the initial sample set includes: image denoising processing and distortion correction processing. And, performing data enhancement processing on the labeled sample set includes: CutMix data enhancement processing and mosaic data enhancement processing.

Embodiment 2:

Gaussian noise, CutMix data enhancement and mosaic data enhancement are randomly added to the original data set, and samples after data enhancement are placed into the original data set. The Gaussian noise refers to a class of noise of which the probability density function follows a Gaussian distribution (i.e., normal distribution). Common Gaussian noise includes fluctuation noise, cosmic noise, thermal noise, and shot noise, etc. CutMix data enhancement randomly cut out a rectangular region of a certain image in the data set and fills the cut image with corresponding regions of other images to obtain a new data set sample. Mosaic data enhancement performs processing such as random turning over, color gamut transformation and scaling on four images in the data set, the processed four images are then placed in four corners in sequence to obtain a new image mixed with the four images and having the same size as that of the original image.

The present disclosure selects a YOLOv5 object detection network for training of a multi-morphological flame model, and determines a YOLOv5 training version according to recognition effects and application requirements, and the YOLOv5 version includes four models of YOLOv5s, YOLOv5m, YOLOv5l, and YOLOv5x, and corresponding weight models are YOLOv5s.pt, YOLOv5m.pt, YOLOv5l.pt and YOLOv5x.pt. Network files provided in a YOLOv5 code exist in a yaml format.

The generated data is divided into independent and non-repetitive training sets and validation sets in a certain proportion by random sampling. A ratio of the training set to the verification set is generally not less than 4:1. The training set is provided to a YOLOv5 model framework for training. The validation set is used to test the model effect in order to verify whether the model performance meets the application requirements.

Further, the YOLOv5 object detection network is a python program code that can be opened by a common python language editor such as pycharm, and training parameters are set in a model train file parse_opt (known=False) function. Weights represents a model weight that can be set to one of YOLOv5s.pt, YOLOv5m.pt, YOLOv5l.pt, and YOLOv5x.pt; data represents a training data set, setting that the corresponding training set may be named fire.yaml; and epochs represents the number of rounds of training, and is set to be not less than 200, and resume represents whether to retrain or continue the previous training result during training, and is set to False during first training, and is set to True when the training is not completed and interrupted during training. All other parameters are set as default options. Training is turned on after training settings are completed.

The core index result values for the YOLOv5 object detection network are dynamically saved in a results.csv file as the training progresses. During the training process, the metric/mAP_0.5 in the results.csv file is continuously and dynamically monitored. When the training ends, it should be ensured that the metric/mAP_0.5 result value is not lower than 0.99, otherwise the indexes are improved by increasing the epochs or expanding the training set.

Verification parameters are set in *parse_opt()* of a model *detect* file, and the model recognition effect is adjusted by adjusting the setting values of *conf-thres* and *iou-thres,* where *conf-thres* represents a confidence threshold of model recognition, is set to be 0.25 by default, and can be adjusted to not higher than 0.5 according to the recognition effect, and *iou-thres* represents an intersection over union threshold, and is set to be 0.45 by default.

Preferably, determining the early warning triggering conditions based on the identified flame features includes: determining that a first fire condition is triggered if there are recognizable flame features; determining that a second fire condition is triggered if the flame features meet preset fire flame features; determining that a third fire condition is triggered if infrared image information identifies the flame features; determining that a fire early warning triggering condition is met when the first fire condition, the second fire condition and the third fire condition are triggered simultaneously; pushing scene image information to a user end when the second fire condition is triggered and the third fire condition is not triggered, or the second fire condition is not triggered and the third fire condition is triggered when determining that the first fire condition is triggered, and determining whether the fire early warning triggering condition is met based on user confirmation information.

Further, fire flame features include a coupling feature of one or more of a flame size feature, a flame location feature, a flame color feature, and a smoke feature.

Preferably, performing false alarm screening on part of identification results of adaptive screening based on differences in flame features of the plurality of frames of images includes: identifying a suspected misjudgment image in image information that meets the fire early warning triggering condition within a predetermined period to form a suspected misjudgment image set; performing false alarm screening on the image information in the misjudgment image set one by one, wherein false alarm types include one or more of static false alarm, dynamic rule movement false alarm, and minimal fuzzy false alarm; performing each preset false alarm type screening rule in sequence, performing false alarm screening on each suspected misjudgment image, outputting image information after false alarm screening, and repeatedly determining the early warning triggering condition based on the image information after the false alarm screening, wherein the preset false alarm type screening rules include one or more of a static false alarm screening rule, a dynamic rule movement false alarm screening rule and a minimal fuzzy false alarm screening rule.

Preferably, in a technique of differences in flame features of a plurality of frames of images, in addition to the basic features of color, texture, form, etc., more complex feature recognition should be considered, including identification results between the plurality of frames of images, recognition target box positions, and changes in recognition confidence. The comprehensive application of these features can significantly improve the accuracy of flame detection and reduce false alarms, especially in complex environments such as scenes with light changes or interference from similar objects.

First, in the plurality of frames of images, the system can determine the stability of the flame features by analyzing the difference of the identification results at a plurality of time points. If the flame features change significantly between different frames, such as a constant change in target box position or a large fluctuation in confidence, the system may preliminarily determine that these images may be cases of dynamic rule movement false alarms or minimal fuzzy false alarms. Secondly, a change in recognition target box position is also an important judgment basis. As a phenomenon with dynamic characteristics, flames usually exhibit continuity in adjacent frames. If the detected flame target box position does not change significantly over a period of time, static false alarm may be caused, and the system may perform filtering according to the static false alarm screening rule. Finally, a change in recognition confidence between the plurality of frames of images can be used to distinguish true flames from false alarms. If the confidence decreases significantly within a predetermined period, particularly when the images contain other interferents like flames, the system can determine whether the flame feature is a false alarm through confidence change analysis.

By combining the differences in flame features of the plurality of frames of images with preset screening rules, the system can filter out false alarm situations more efficiently, outputting more accurate image information. The technical effect of this method is remarkable, by reducing static false alarm, dynamic rule movement false alarm and minimal fuzzy false alarm, the system can reduce the occurrence of false alarm situations, improving the reliability and accuracy of fire early warning. In addition, the system can also repeatedly determine the fire early warning triggering condition based on the image information after false alarm screening, so that a fire detection system has higher robustness and adaptability, and is suitable for various complex monitoring scenes.

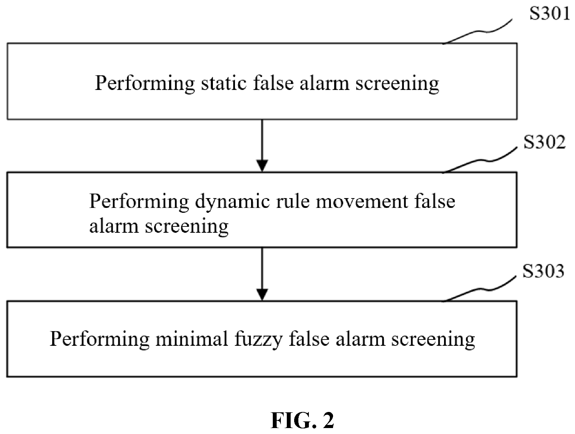

Specifically, as shown in FIG. 2, the following steps are included:

Step S301: static false alarm screening is performed.

Specifically, other image frames of the misjudgment images within the predetermined period are extracted, together with a current misjudgment image to form a misjudgment and research and judgment set; an inter-frame drift amount between adjacent image frames in the misjudgment and research and judgment set is identified, and the inter-frame drift amount is compared with a preset inter-frame drift threshold, and if an inter-frame drift amount between consecutive n adjacent image frames is less than the preset inter-frame drift threshold, it is determined that there is static false alarm for the current misjudgment image, and false alarm screening needs to be performed, wherein the inter-frame drift amount is a maximum offset of a recognition box, an offset of a center point of the recognition box or an offset of a centroid of a segmented target.

Step S302: dynamic rule movement false alarm screening is performed.

Specifically, other image frames of the misjudgment images within the predetermined period are extracted, together with a current misjudgment image to form a misjudgment and research and judgment set; a recognition box area relationship value between adjacent image frames in the misjudgment and research and judgment set is identified, and the recognition box area relationship value is compared with a preset recognition box area relationship value threshold, and if a recognition box area relationship value between consecutive n adjacent image frames is less than the preset recognition box area relationship value threshold, it is determined that there is dynamic rule movement false alarm for the current misjudgment image, and false alarm screening needs to be performed, wherein the recognition box area relationship value is a recognition box area difference value or a recognition box area ratio value.

Step S303: minimal fuzzy false alarm screening is performed.

Specifically, other image frames of the misjudgment images within the predetermined period are extracted, together with a current misjudgment image to form a misjudgment and research and judgment set; a recognition box area value for each image frame in the misjudgment and research and judgment set is identified, and the recognition box area value for each image frame is compared with a preset pixel area limitation threshold of a recognition box, and if the recognition box area values of consecutive n image frames are less than the preset pixel area limitation threshold of the recognition box, it is determined that there is minimal fuzzy false alarm for the current misjudgment image, and false alarm screening needs to be performed.

Embodiment 3:

Preferably, when the current flame monitoring solution is the furnace flame status monitoring solution, the scene image includes: flame video image information and/or infrared image information of each furnace nozzle. Acquiring the identified flame features based on the scene image includes: identifying flame video image and/or infrared image information of each furnace nozzle by utilizing a plurality of image recognition algorithms to obtain a flame morphology identification result corresponding to each furnace nozzle; and using the flame morphology identification result corresponding to each furnace nozzle as the identified flame features.

Further, identifying the flame video image of each furnace nozzle by utilizing the plurality of image recognition algorithms to obtain the flame morphology identification result corresponding to each furnace nozzle includes: extracting a gray value and brightness information of each pixel point on each frame of flame image in the flame video images; calculating the gray value of each pixel point on each frame of flame image by a maximum between-class variance method to obtain a gray threshold of each frame of flame image; determining the flame morphology under the maximum between-class variance method based on pixel points of which gray values are greater than the corresponding gray thresholds on each frame of flame image; determining a brightness change amount of each pixel point on each frame of flame image relative to adjacent pixel points according to the extracted brightness information; activating pixel points with a brightness change amount of greater than zero to obtain the flame morphology under the Boolean variable method; and obtaining the flame morphology identification result corresponding to each furnace nozzle based on the flame morphology under the maximum between-class variance method and the flame morphology under the Boolean variable method.

Optionally, the above steps specifically may include:

1) a gray value and brightness information of each pixel point on each frame of image are extracted.
In an embodiment, extracting the gray value and brightness information of each pixel point on each frame of image may be implemented by the following step:

a pixel value of each pixel point on each frame of image is calculated to obtain the gray value and brightness information of each pixel point on each frame of image, wherein the pixel value includes: a red channel value, a green channel value, and a blue channel value;

$$Gray = 0.299 * R + 0.587 * G + 0.114 * B;$$

$$Light = 0.2126 * R + 0.7152 * G + 0.0722 * B;$$

wherein GrayGray represents the gray value of each pixel point on each frame of image; *Light* represents brightness information of each pixel point on each frame of image; *RR* represents the red channel value of each pixel point on each frame of image; *GG* represents the green channel value of each pixel point on each frame of image; and *B* represents the blue channel value of each pixel point on each frame of image.

2) the gray value of each pixel point on each frame of image is calculated by the maximum between-class variance method to obtain a gray threshold of each frame of image.

The maximum between-class variance method is a method to automatically calculate a threshold value that is self-adaptable to the bimodal situation, also called OTSU. The OTSU divides an image into two parts of a background and an object according to gray characteristics of the image, the larger a between-class variance between the background and the object, the larger the difference between the two parts constituting the image, and the smaller the between-class variance between the background and the object, the smaller the difference between the two parts constituting the image.

For ease of understanding, the maximum between-class variance method is described below:

$$p_1 m_1 + p_2 m_2 = mG;$$

$$p_1 + p_2 = 1;$$

$$\sigma^2 = p_1 (m_1 - mG)^2 + p_2 (m_2 - mG)^2;$$

simplification is performed to obtain $\sigma^2 = p_1 p_2 (m_1 - m_2)^2$;

wherein $m_1$ represents an average value of gray values of background pixel points in the images; $m_2$ represents an average value of gray values of foreground pixel points in the images; $mG$ represents an average value of gray values of all pixels in the images; $p_1$ represents a probability that the pixel points are divided into the background pixel points in the images, $p_2$ represents a probability that the pixel points are divided into the foreground pixel points in the images; and $\sigma^2$ denotes a between-class variance.

$\sigma^2$ is the gray threshold of the image we require.

3) pixel points of which gray values are greater than the corresponding gray thresholds on each frame of image are determined as the flame morphology under the maximum between-class variance method.

Specifically, the gray value of each pixel point on each frame of image is compared with the gray threshold of each frame of image, the pixel points of which the gray values are greater than the gray threshold are determined as flame pixel points, and then all the flame pixel points constitute the flame morphology in each frame of image under the maximum between-class variance method.

4) a brightness change amount of each pixel point on each frame of image relative to adjacent pixel points is determined according to the extracted brightness information.

According to the nature of combustion, the brightness of an outer ring of flame is highest, so a Boolean variable is used to identify the flame morphology for each frame of image. Specifically, after the brightness information of each pixel point on each frame of image is read, brightness data between each pixel point and other four adjacent pixel points are compared and analyzed respectively, so as to determine the brightness change amount of each pixel point.

5) pixel points with a brightness change amount of greater than zero are activated to obtain the flame morphology in each frame of image under the Boolean variable.

Specifically, the pixel points with a brightness change amount of greater than zero are activated to obtain an outer ring of flame in each frame of image, and then by reading array pixels of the images, and drawing the outer ring of the flame in the images with a function, the flame morphology in each frame of image under the Boolean variable is obtained.

In another possible embodiment, a probability that each pixel point appears within the flame morphology under the maximum between-class variance method formed after superposition can be obtained by the following manner: for each pixel point:

First step: if a current pixel point is within the flame morphology under the maximum between-class variance method formed after superposition, the current pixel point is set as a first identifier;
Second step: if the current pixel point is not within the flame morphology under the maximum between-class variance method formed after superposition, the current pixel point is set as a second identifier; and
Third step: the number of times that the current pixel point is the first identifier in the plurality of frames of images is calculated, and a ratio of the number of times to the number of frames of the plurality of frames of images is taken as the probability that the current pixel point appears within the flame morphology under the maximum between-class variance method formed after superposition.

For ease of understanding, an example is given below:
Each pixel point on each frame of image in which the flame morphology is identified by the maximum between-class variance method is binarized, that is, a pixel point characterizing the flame morphology is set to be 1 (the first identifier), a pixel point characterizing the non-flame morphology is set to be 0 (the second identifier), the number of times that each pixel point appears as 1 in the plurality of frames of images is then calculated, and a ratio of the number of times of occurrence to the number of frames of the plurality of frames of images is taken as the probability that each pixel point appears within the flame morphology under the maximum between-class variance method formed after superposition, and finally, a pixel point of which the probability of occurrence is greater than a preset probability threshold is taken as the flame morphology under the maximum between-class variance method.

In an embodiment, a probability that each pixel point appears within the flame morphology under the Boolean variable formed after superposition can be obtained by the following manner: for each pixel point:

First step: if a current pixel point is within the flame morphology under the Boolean variable formed after superposition, the current pixel point is set as a third identifier;
Second step: if the current pixel point is not within the flame morphology under the Boolean variable formed after superposition, the current pixel point is set as a fourth identifier; and
Third step: the number of times that the current pixel point is the third identifier in the plurality of frames of images is calculated, and a ratio of the number of times to the number of frames of the plurality of frames of images is taken as the probability that the current pixel point appears within the flame morphology under the Boolean variable formed after superposition.

For ease of understanding, an example is given below:
Each pixel point on each frame of image in which the flame morphology is identified by the Boolean variable is binarized, that is, a pixel point characterizing the flame morphology is set to be 1 (the third identifier), a pixel point characterizing the non-flame morphology is set to be 0 (the fourth identifier), the number of times that each pixel point appears as 1 in the plurality of frames of images is then calculated, and a ratio of the number of times of occurrence to the number of frames of the plurality of frames of images is taken as the probability that each pixel point appears within the flame morphology under the Boolean variable formed after superposition, and finally, a pixel point of which the probability of occurrence is greater than a preset probability threshold is taken as the flame morphology under the Boolean variable.

Specifically, determining the flame morphology under the maximum between-class variance method based on pixel points of which gray values are greater than the corresponding gray thresholds on each frame of flame image includes: superpositioning the flame morphology of each furnace nozzle in each frame of image in the flame video image under the maximum between-class variance method, and determining the probability that each pixel point appears within the flame morphology under the maximum inter-class variance method formed after superposition; and combining pixel points of which the probability of occurrence is greater than a first preset probability threshold as the flame morphology under the maximum between-class variance method. And, activating pixel points with a brightness change amount of greater than zero to obtain the flame morphology in each frame of flame image under the Boolean variable method includes: superpositioning the flame morphology of each furnace nozzle in the flame video image under the Boolean variable method, and determining the probability that each pixel point appears within the flame morphology under the Boolean variable method formed after superposition; and combining pixel points of which the probability of occurrence is greater than a preset second probability threshold as the flame morphology under the Boolean variable method.

Specifically, the method further includes: performing flame morphology correction based on feature parameters of the flame morphology under each image recognition algorithm to obtain a corrected flame morphology. Specifically, the performing flame morphology correction includes: determining a flame morphology error value based on feature parameters of the flame morphology under the maximum between-class variance method and feature parameters of the flame morphology under the Boolean variable method; if the flame morphology error value is less than a preset error threshold, taking the flame morphology under the Boolean variable method as the corrected flame morphology; otherwise, performing flame morphology recognition again based on the maximum between-class variance method and the Boolean variable method until the flame morphology error value of both is less than the preset error threshold.

The feature parameters of the flame morphology include: a flame height, a flame width, a flame area, a flame pulsation frequency and a flame inclination. And, determining the flame morphology error value based on feature parameters of the flame morphology under the maximum between-class variance method and feature parameters of the flame morphology under the Boolean variable method includes: respectively calculating differences between the flame height, the flame width, the flame area, the flame pulsation frequency and the flame inclination under the maximum between-class variance method and the flame height, the flame width, the flame area, the flame pulsation frequency and the flame inclination under the Boolean variable to obtain a flame height error value, a flame width error value, a flame area error value, a flame pulsation frequency error value and a flame inclination error value; performing calculation on the flame height error value, the flame width error value, the flame area error value, the flame pulsation frequency error value and the flame inclination error value to obtain the flame morphology error value, where a calculation formula is:

$$X = 0.2 * H + 0.2 * W + 0.1 * S + 0.1 * f + 0.4 * \theta;$$

wherein $X$ represents the flame morphology error value; $H$ represents the flame height error value; $W$ represents the flame width error value; $S$ represents the flame area error value; $f$ represents the flame pulsation frequency error value; and $\theta$ represents the flame inclination error value.

Step S40: on the basis of the identified flame features, perform early warning triggering condition determination, and execute a corresponding early warning solution on the basis of a triggered early warning triggering condition.

In particular, the early warning triggering conditions include: a furnace nozzle extinguishing early warning condition, a furnace nozzle burning efficiency early warning condition and a furnace nozzle abnormal burning early warning condition.

In a possible embodiment, a trigger rule for the furnace nozzle extinguishing early warning condition includes: acquiring image information simultaneously transmitted back by the image collection devices of the same furnace nozzle at different viewing angles; determining whether there are the flame features for the corresponding furnace nozzle based on the image information simultaneously transmitted back by the image collection devices to obtain a plurality of flame morphology identification results; if the plurality of flame morphology identification results are all that the furnace nozzle is extinguished, determining that the result is that the furnace nozzle is extinguished; if all of the plurality of flame morphology identification results are that the furnace nozzle is not extinguished, determining that the result is that the furnace nozzle is not extinguished; if the plurality of flame morphology identification results are not consistent, determining the plurality of flame morphology identification results to identify an abnormal flame morphology identification result and a non-abnormal flame morphology identification result; determining whether the furnace nozzle is extinguished according to the abnormal flame morphology identification result and the non-abnormal flame morphology identification result; and traversing all the furnace nozzles to obtain the extinguishing situation of each furnace nozzle, and if the number of extinguished furnace nozzles is greater than a preset number threshold of extinguished furnace nozzles, determining that the furnace nozzle extinguishing early warning condition is triggered.

In particular, determining the plurality of flame morphology identification results to identify the abnormal flame morphology identification result and the non-abnormal flame morphology identification result if the plurality of flame morphology identification results are not consistent includes: if the plurality of flame morphology identification results are not consistent, performing preliminary determination on the plurality of flame morphology identification results to obtain a preliminary determination result. When the preliminary determination result is that the plurality of flame morphology identification results do not belong to a suspected abnormal image, the plurality of flame morphology identification results are input into a preset database for matching to determine whether the furnace nozzle is extinguished. Wherein the preset database stores the furnace nozzle determination results corresponding to different flame morphology identification results of the plurality of image recognition algorithms. If the preliminary determination result is that the plurality of flame morphology identification results belong to the suspected abnormal image, secondary determination is performed on the flame morphology identification results to obtain a secondary determination result. According to the secondary determination result, the abnormal flame morphology identification result and the non-abnormal flame morphology identification result are determined.

Performing preliminary determination on the plurality of flame morphology identification results if the plurality of flame morphology identification results are not consistent to obtain the preliminary determination result includes: generating line chart data by using the plurality of flame morphology identification results in a preset arrangement sequence. The line chart data is compared with a preset standard line chart to obtain a comparison result. Based on the comparison result, it is preliminarily determined whether the plurality of flame morphology identification results belong to the suspected abnormal image to obtain the preliminary determination result.

In particular, for any furnace nozzle, when the plurality of flame morphology identification results are not consistent, the plurality of flame morphology identification results are arranged in the preset arrangement sequence (e.g., the results obtained by the OTSU are first arranged, the results obtained by the Boolean variable method are then arranged, and the results obtained by the yolo V5 algorithm are then arranged) to obtain the line chart data, and the line chart data is compared with the preset standard line chart to obtain the comparison result, and the comparison result can characterize a difference between a trend of the line chart data and a trend of the preset standard line chart. If the difference between the trend of the line chart data and the trend of the preset standard line chart is greater than a preset deviation, then all of the flame morphology identification results are determined as suspected abnormal images, otherwise if the difference between the trend of the line chart data and the trend of the preset standard line chart is within a range of the preset deviation, the flame morphology identification results are determined to be not belong to the suspected abnormal images. Screening of the suspected abnormal images is thereby achieved.

In this embodiment, the preset standard line chart is drawn by using the identification result of identifying normal burning of the furnace nozzles by the image recognition algorithms. The preset standard line chart may include a plurality of line data indicating the identification results of the image recognition algorithms under different and normal burning conditions of the furnace nozzles.

In addition, performing secondary determination on the flame morphology identification results if the preliminary determination result is that the plurality of flame morphology identification results belong to the suspected abnormal image to obtain the secondary determination result includes:

after adjusting process parameters of the furnace nozzles, acquiring combustion test images of the furnace nozzles; identifying the combustion test images by using the image recognition algorithms to obtain corresponding flame morphology test identification results; and
for any one image recognition algorithm, respectively comparing the corresponding flame morphology test identification results with a plurality of corresponding standard images to obtain a plurality of comparison results;
wherein the standard image corresponding to any one image recognition algorithm is a previously acquired image identified by the image recognition algorithm when flame from the furnace nozzles normally burns under various conditions (e.g., varying the size, the density, the concentration and the like of gas input to the furnace nozzles); whether the flame morphology test identification result is abnormal is determined based on the plurality of comparison results to determine whether the flame morphology identification result corresponding to the image recognition algorithm is abnormal to obtain the secondary determination result.

Specifically, the furnace nozzles corresponding to the flame morphology identification results subjected to the secondary determination are recalibrated to wait for image collection again. The process parameters (e.g., the size, the density, the concentration and the like of the input gas) of the calibrated furnace nozzle are adjusted at a front end, and then the furnace nozzle is ignited again to obtain the combustion test image of the furnace nozzle. The combustion test images are identified by using the image recognition algorithms to obtain the corresponding flame morphology test identification results. For any one image recognition algorithm, the corresponding flame morphology test identification results are respectively compared with the plurality of standard images corresponding to the image recognition algorithm to obtain the plurality of comparison results, and if the comparison results all exceed a preset threshold, it indicates that the flame morphology identification result identified by the image recognition algorithm is indeed the abnormal flame morphology identification result, so that it is further determined whether each suspected abnormal image is truly the abnormal flame morphology identification result through secondary determination. Furthermore, the object of identifying the abnormal flame morphology identification result and the non-abnormal flame morphology identification result from the plurality of flame morphology identification results is achieved. The occurrence of misjudgment of flame extinguishing is then prevented.

According to the abnormal flame morphology identification result and the non-abnormal flame morphology identification result, it is determined whether the furnace nozzle is extinguished.

Specifically, the abnormal flame morphology identification results are discarded and the non-abnormal flame morphology identification results are retained. All the non-abnormal flame morphology identification results are input into the preset database (the furnace nozzle determination results corresponding to different flame morphology identification results of the plurality of image recognition algorithms are stored in the preset database) for matching to determine whether the furnace nozzle is extinguished.

In the above implementation process, if the user monitors a target heating furnace by respectively using a plurality of cameras configured with corresponding image recognition algorithms, monitoring videos collected by the cameras are obtained. If the result identified by any one image recognition algorithm is the abnormal flame morphology identification result, then it may indicate a problem of the camera (e.g., the camera is damaged).

In some implementations of this embodiment, after determining the abnormal flame morphology identification result and the non-abnormal flame morphology identification result according to the secondary determination result, the method further includes:

discarding the abnormal flame morphology identification result, and adding the non-abnormal flame morphology identification result to the preset standard line chart.

Specifically, the abnormal flame morphology identification result is discarded, and the non-abnormal flame morphology identification result is marked as a normal image to be added to the preset standard line chart in the method, so as to further improve the accuracy rate of the determination.

In one possible embodiment, a trigger rule for the furnace nozzle burning efficiency early warning condition includes: identifying an actual flame area and an actual combustion area based on the flame area; calculating the flame combustion efficiency according to the actual flame area and the actual combustion area; and determining that the furnace nozzle burning efficiency early warning condition is triggered when the flame combustion efficiency is lower than the expected combustion efficiency.

Specifically, the actual flame area is calculated according to a combustion region during actual burning in the target heating furnace; an actual red zone area is calculated according to a red zone of the target heating furnace during actual burning; and the flame combustion efficiency is calculated according to a normal combustion area, the actual flame area and the actual red zone area of the target heating furnace. The actual flame area includes an overall combustion area. And, calculating the actual flame area according to the combustion region of the target heating furnace during actual burning includes: acquiring a combustion image during actual burning in the target heating furnace; determining a combustion region image from the combustion image; measuring and calculating an area of the combustion region image to obtain the overall combustion area. The flame combustion efficiency includes the overall combustion efficiency. And, calculating the flame combustion efficiency according to the normal combustion area and the actual flame area of the target heating furnace includes: obtaining the overall combustion efficiency based on the overall combustion area and the normal combustion area of the target heating furnace. The actual red zone area includes an overall red zone area. And, calculating the actual red zone area according to the red zone of the target heating furnace during actual burning includes: performing RGB image recognition on the combustion image to obtain an identification result; determining an overall red zone according to the identification result; and measuring and calculating an area of the overall red zone to obtain the overall red zone area. The flame combustion efficiency includes the overall red zone combustion efficiency. And, calculating the flame combustion efficiency according to the normal combustion area and the actual red zone area of the target heating furnace includes: determining the overall red zone combustion efficiency based on the overall red zone area and the normal combustion area of the target heating furnace.

Further, the flame combustion efficiency includes the combustion efficiency of a single furnace nozzle; and calculating the flame combustion efficiency according to the normal combustion area, the actual flame area and the actual red zone area of the target heating furnace includes: for any one furnace nozzle of the target heating furnace, obtaining a combustion region and a red zone of the furnace nozzle during actual burning; calculating a corresponding flame area of the single furnace nozzle according to the combustion region of the furnace nozzle during actual burning; calculating a corresponding red zone area of the single furnace nozzle according to the red zone of the furnace nozzle during actual burning; and calculating the combustion efficiency of the single furnace nozzle according to a normal combustion area of the furnace nozzle, the flame area of the single furnace nozzle and the red zone area of the single furnace nozzle.

Further, obtaining the combustion region and the red zone of the furnace nozzle during actual burning for any one furnace nozzle of the target heating furnace includes: after performing gray processing on the combustion image, identifying a gray value of each pixel point on the combustion image; determining a coincident portion and a non-coincident portion of adjacent furnace nozzles in the combustion image according to the gray value of each pixel point; determining, from the coincident portion and the non-coincident portion of any one furnace nozzle, the combustion region of the furnace nozzle during actual burning; and performing RGB image recognition on the combustion region of the furnace nozzle to identify the red zone of the furnace nozzle during actual burning.

Further, combustion parameters of the target heating furnace are acquired; according to the combustion parameters, a furnace characteristic parameter $\pi_f$ and an air characteristic parameter $\pi_a$ are calculated; a flame combustion area of the target heating furnace at a combustion efficiency of 100% is calculated according to the combustion parameters, the furnace characteristic parameter $\pi_f$ and the air characteristic parameter $\pi_a$; of the target heating furnace is obtained.

Further, the combustion parameters include a burner flow rate Q, a fuel calorific value ΔH, a fuel density $\rho_f$, $\rho_a$, $T_a$, C; and a formula for calculating the furnace characteristic parameter $\pi_f$ is $\pi_f = \dfrac{\rho_f Q \Delta H}{D^{25}}$ , a formula for calculating the air characteristic parameter $\pi_a$ is $\pi_a = \dfrac{1}{\rho_a c_p T_a \sqrt{g}}$ , and a formula for calculating the flame combustion area of the target heating furnace at a combustion efficiency of 100% is $S = C \times D \times (\pi_f \times \pi_a)^{0.4}$ .

Embodiment 4:

The flame combustion efficiency includes the overall combustion efficiency. Calculating the flame combustion efficiency according to the normal combustion area and the actual flame area of the target heating furnace includes: obtaining the overall combustion efficiency based on the overall combustion area and the normal combustion area of the target heating furnace.

Specifically, a fluctuation of the normal combustion area of the target heating furnace is $S_n$=0.8S~1.2S, where $S_n$ is the normal combustion area and S is the flame combustion area of the target heating furnace at a combustion efficiency of 100%. The overall combustion efficiency $R_1$ is a ratio of the overall combustion area $S_1$ to the normal combustion area $S_n$, i.e., $R_1 = \dfrac{S_1}{S_n} \times 100\%$ .

In this embodiment, the overall combustion efficiency is graded: when $R_1 \in (0.8,1]$, it belongs to complete combustion, when $R_1 E (0.3,0.8]$, it belongs to incomplete combustion, and when $R_1 E [0,0.3]$, it belongs to abnormal working conditions.

The flame combustion efficiency further includes the overall red zone combustion efficiency. Calculating the flame combustion efficiency according to the normal combustion area and the actual red zone area of the target heating furnace includes: determining the overall red zone combustion efficiency based on the overall red zone area and the normal combustion area of the target heating furnace.

In particular, the overall red zone combustion efficiency $R_2$ is a ratio of the overall red zone area $A_1$ to the normal combustion area $S_n$, i.e., $R_2 = \dfrac{A_1}{S_n} \times 100\%$ . The overall red zone combustion efficiency is graded: when $R_2 \in [0,0.05)$, it belongs to complete combustion, when $R_2 \in [0.05,0.1)$, it belongs to incomplete combustion, and when $R_2 \in [0.1,1]$, it belongs to abnormal working conditions.

In addition, the above flame combustion efficiency also includes the combustion efficiency of a single furnace nozzle. Calculating the flame combustion efficiency according to the normal combustion area, the actual flame area and the actual red zone area of the target heating furnace includes:
for any one furnace nozzle of the target heating furnace, obtaining a combustion region and a red zone of the furnace nozzle during actual burning.

In some implementations of this embodiment, for any one furnace nozzle of the target heating furnace, obtaining the combustion region and the red zone of the furnace nozzle during actual burning includes: after performing gray processing on the combustion image, identifying a gray value of each pixel point on the combustion image; determining a coincident portion and a non-coincident portion of adjacent furnace nozzles in the combustion image according to the gray value of each pixel point; determining, from the coincident portion and the non-coincident portion of any one furnace nozzle, the combustion region of the furnace nozzle during actual burning; and performing RGB image recognition on the combustion region of the furnace nozzle to identify the red zone of the furnace nozzle during actual burning. Specifically, firstly, according to the gray values of the pixel points in the combustion image, the combustion regions of single furnace nozzles during actual burning are distinguished. For example, if there is no coincident portion between flames of two single furnace nozzles, there will be a blank gap between the flames of two single furnace nozzles, and the combustion region of the single furnace nozzle during actual burning can be distinguished according to the blank gap. If a coincident portion occurs between the flames of two single furnace nozzles, there will be a change in the gray value at a critical point of the coincident portion and the non-coincident portion, and the combustion region of the single furnace nozzle during actual burning can also be distinguished according to the gray value. Then, for the combustion region, the red zone is determined by a R value in the RGB image recognition, that is, when the R value of any one sub-region image in the combustion region reaches a preset threshold, it is determined that the sub-region belongs to the red zone.

The corresponding flame area of the single furnace nozzle is calculated according to the combustion region of the furnace nozzle during actual burning;

wherein a manner of calculating the flame area of the single furnace nozzle is consistent with the above manner of measuring and calculating the overall combustion area of the target heating furnace, which will not be repeated here.

The corresponding red zone area of the single furnace nozzle is calculated according to the red zone of the furnace nozzle during actual burning;

wherein a manner of calculating the red zone area of the single furnace nozzle is consistent with the above manner of measuring and calculating the overall red zone area, which will not be repeated herein.

The combustion efficiency of the single furnace nozzle is calculated according to the normal combustion area of the furnace nozzle, the flame area of the single furnace nozzle and the red zone area of the single furnace nozzle.

In particular, the combustion efficiency of the single furnace nozzle includes the overall combustion efficiency of the single furnace nozzle and the red zone combustion efficiency of the single furnace nozzle. The overall combustion efficiency of the single furnace nozzle is a ratio of the flame area of the single furnace nozzle to the normal combustion area of the furnace nozzle, and the red zone combustion efficiency of the single furnace nozzle is a ratio of the red zone area of the single furnace nozzle to the normal combustion area of the furnace nozzle. Thus, by combining the overall combustion efficiency of the single furnace nozzle and the red zone combustion efficiency of the single furnace nozzle, the combustion efficiency of the single furnace nozzle can be obtained.

Exemplarily, whether the combustion efficiency of the single furnace nozzle is an abnormal combustion efficiency can be determined in the following two ways:

first way: when one of the overall combustion efficiency of the single furnace nozzle and the red zone combustion efficiency of the single furnace nozzle is the abnormal combustion efficiency, the combustion efficiency of the single furnace nozzle is regarded as the abnormal combustion efficiency;

second way: when the overall combustion efficiency of the single furnace nozzle and the red zone combustion efficiency of the single furnace nozzle are simultaneously the abnormal combustion efficiency, the combustion efficiency of the single furnace nozzle is regarded as the abnormal combustion efficiency.

In the above implementation process, in the method, the actual flame area and the actual red zone area are respectively calculated according to the combustion region and the red zone of the target heating furnace during actual burning. The actual flame area may include the overall combustion area of the target heating furnace and the flame area of the single furnace nozzle in the furnace nozzles, and the actual red zone area may include the overall red zone area of the target heating furnace and the red zone area of the single furnace nozzle in the furnace nozzles. The flame combustion efficiency is then calculated according to the normal combustion area, the actual flame area and the actual red zone area of the target heating furnace, and then the flame combustion efficiency may include the overall combustion efficiency, the overall red zone combustion efficiency and the combustion efficiency of the single furnace nozzle of the target heating furnace. Thus, the combustion conditions of the target heating furnace can be fully and accurately reflected by the flame combustion efficiency, and the purpose of full monitoring and quantitative analysis of the flame combustion efficiency is achieved.

In one possible implementation, a trigger rule for the furnace nozzle abnormal burning early warning condition includes: respectively determining error values between the flame width, the flame area, the flame pulsation frequency, the flame color and the flame inclination and corresponding preset parameters; determining whether there is an abnormality in each comparison relationship based on each error value and a preset error threshold under the corresponding comparison relationship; and determining that the furnace nozzle abnormal burning early warning condition is triggered when the number of comparison relationships in which abnormalities exist is greater than a preset number of comparison relationships.

Specifically, a preset fault index value includes: a preset flame area, a preset flame height, a preset flame brightness, a preset flame bottom RGB value, a preset flame top RGB value, a preset flame inclination angle, a preset flame pulsation frequency, a preset discharge temperature, a preset furnace temperature, a preset incoming material flow rate and a preset oxidant gas flow rate. And, determining fault information of a petrochemical heating furnace based on a preset judgment rule of preset fault information and operation parameters includes: determining that the petrochemical heating furnace is in a furnace tube rupture state when the discharge temperature is less than the preset discharge temperature, and the flame area is greater than the preset flame area or the flame brightness is greater than the preset flame brightness or the flame height is greater than the preset flame height; determining that the petrochemical heating furnace is in a state of excessive fuel when any one of the discharge temperature, the furnace temperature, an incoming material flow rate and an oxidant gas flow rate is correspondingly greater than the preset discharge temperature, the preset furnace temperature, the preset incoming material flow rate and the preset oxidant gas flow rate, and when a flame bottom RGB value is less than the preset flame bottom RGB value or the flame area is greater than the preset flame area or the flame height is greater than the preset flame height or a flame top RGB value is greater than the preset flame top RGB value; determining that the petrochemical heating furnace is in a state of excessive oxidant gas when the incoming material flow rate is less than the preset incoming material flow rate or the oxidant gas flow rate is greater than the preset oxidant gas flow rate, and a flame inclination angle is greater than the preset flame inclination angle or a flame pulsation frequency is greater than the preset flame pulsation frequency; and determining that the petrochemical heating furnace is in a state of burner blockage when the flame height is less than the preset flame height or the flame brightness is less than the preset flame brightness.

Specifically, after determining the fault information of the petrochemical heating furnace, the method further includes: forming an intermediate fault set based on other preset fault information other than the determined fault information of the petrochemical heating furnace; determining whether a part of the operating parameters corresponding to the preset fault information in the middle fault set comply with the preset judgment rule of the corresponding preset fault information, and another part of the operating parameters do not comply with the preset judgment rule of the corresponding preset fault information; if yes, marking the corresponding preset fault information as disputed fault information; traversing the intermediate fault set to obtain all disputed fault information to form a disputed fault set, and forming an initial to-be-graded fault set by the remaining fault information; performing fault determination on the preset fault information in the disputed fault set based on a redundancy decision rule to obtain a single fault set, wherein the operation parameters corresponding to the preset fault information in the single fault set comply with the preset judgment rule of the corresponding preset fault information; and seeking a union based on the single fault set and the initial to-be-graded fault set to obtain a to-be-graded fault set.

Specifically, defining a fault risk level of the fault information of the petrochemical heating furnace and determining the fault risk level of the fault information of the petrochemical heating furnace include: calculating an absolute value of a direct difference between the operation parameter corresponding to the fault information of the petrochemical heating furnace and a corresponding preset fault index value; correlating the absolute value of each difference with the preset fault index value of the corresponding operation parameter for which the difference was calculated, thereby obtaining a correlation relationship; extracting a correlation relationship weight from a weight library based on the correlation relationship; and de-dimensionalizing the absolute value of each difference, and calculating a risk score of the fault information of the petrochemical heating furnace based on the corresponding correlation relationship of the absolute value of the difference after the de-dimensionalizing, where a calculation rule is as follows:

$$S_i = T_1 \times \omega_1 + T_2 \times \omega_2 + \cdots T_n \times \omega_n$$

wherein $S_i$ is the risk score of the fault information of the petrochemical heating furnace; $T_n$ is an absolute value of a difference between an nth operating parameter in the fault information of the petrochemical heating furnace and its corresponding preset fault index value; $\omega_n$ is a correlation relationship weight corresponding to an nth correlation relationship in the fault information of the petrochemical heating furnace; defining the fault risk level of the fault information of the petrochemical heating furnace is performed based on the risk score of the fault information of the petrochemical heating furnace and a preset grading score table.

Embodiment 5:

For ease of understanding, the following description is made in connection with Table 1:

Table 1

| Feature parameters of the flame morphology | | | | | | | DCS monitoring data | | | | Fault information |
|---|---|---|---|---|---|---|---|---|---|---|---|
| Flame area | Flame height | Flame brightness | Flame bottom RGB value | Flame top RGB value | Flame inclination angle | Flame pulsation frequency | Discharge temperature | Furnace temperature | Incoming material flow rate | Oxidant gas flow rate | Fault information |
|  | Increase |  |  |  |  |  | Reduced |  |  |  | Furnace tube rupture |
| Increase |  |  |  |  |  |  | Reduced |  |  |  |  |
|  |  | Increase |  |  |  |  | Reduced |  |  |  |  |
|  |  |  | Decrease |  |  |  | Any one increases |  |  |  | Excessive fuel |
| Increase |  |  |  |  |  |  | Any one increases |  |  |  |  |
|  | Increase |  |  |  |  |  | Any one increases |  |  |  |  |
|  |  |  |  | Increase |  |  | Any one increases |  |  |  |  |
|  |  |  |  | Increase |  |  |  |  | Increase |  | Excessive oxidant gas |
|  |  |  |  | Increase |  |  | Decrease |  |  |  |  |
|  |  |  |  |  | Accelerated |  | Decrease |  |  |  |  |
|  |  |  |  |  | Accelerated |  |  |  | Increase |  |  |
| ↗ | Become smaller |  |  |  |  |  |  |  |  |  | Burner blockage |
|  |  | Become smaller |  |  |  |  |  |  |  |  |  |

The increase and decrease shown in Table 1 refer to increase or decrease with respect to respective preset values. The preset values herein refer to a preset flame area, a preset flame height, a preset flame brightness, a preset flame bottom RGB value, a preset flame top RGB value, a preset flame inclination angle, a preset flame pulsation frequency, a preset discharge temperature, a preset furnace temperature, a preset incoming material flow rate and a preset oxidant gas flow rate.

As shown in Table 1, there are three situations that characterize furnace tube rupture. A first situation: the flame height is greater than the preset flame height, and the discharge temperature is less than the preset discharge temperature. A second situation: a flame area is greater than the preset flame area, and the discharge temperature is less than the preset discharge temperature. And a third situation: the flame brightness is greater than the preset flame brightness, and the discharge temperature is less than the preset discharge temperature.

There are four situations that characterize excessive fuel. A first situation: a flame bottom RGB value is less than the preset flame bottom RGB value (i.e., no flame), and any one of the discharge temperature, the furnace temperature, an incoming material flow rate and an oxidant gas flow rate is greater than the corresponding preset value. A second situation: a flame area is greater than the preset flame area, and any one of the discharge temperature, the furnace temperature, the incoming material flow rate and the oxidant gas flow rate is greater than the corresponding preset value. A third situation: the flame height is greater than the preset flame height, and any one of the discharge temperature, the furnace temperature, the incoming material flow rate and the oxidant gas flow rate is greater than the corresponding preset value. And a fourth situation: a flame top RGB value is greater than the preset flame top RGB value, and any one of the discharge temperature, the furnace temperature, the incoming material flow rate and the oxidant gas flow rate is greater than the corresponding preset value.

There are four situations that characterize excessive oxidant gas. A first situation: a flame inclination angle is greater than the preset flame inclination angle, and the oxidant gas flow rate is greater than a preset oxidant gas flow rate. A second situation: the flame inclination angle is greater than the preset flame inclination angle, and the incoming material flow rate is less than the preset incoming material flow rate. A third situation: a flame pulsation frequency is greater than the preset flame pulsation frequency, and the incoming material flow rate is less than the preset incoming material flow rate. And a fourth situation: the flame pulsation frequency is greater than the preset flame pulsation frequency, and the oxidant gas flow rate is greater than the preset oxidant gas flow rate; and

There are two situations that characterize burner blockage. A first situation: the flame height is less than the preset flame height; and a second situation: the flame brightness is less than the preset flame brightness.

Preferably, the early warning triggering conditions include: a fire early warning triggering condition in the open space monitoring scene; and a furnace nozzle extinguishing early warning condition, a furnace nozzle burning efficiency early warning condition and a furnace nozzle abnormal burning early warning condition in the confined space monitoring scene. And executing the corresponding early warning solution based on the triggered early warning triggering condition includes: if the triggered early warning triggering condition is the fire early warning triggering condition, performing a fire extinguishing operation in conjunction with a fire water sprinkler system being started while outputting a fire alarm signal; and if the triggered early warning triggering condition is the furnace nozzle extinguishing early warning condition, the furnace nozzle burning efficiency early warning condition or the furnace nozzle abnormal burning early warning condition, pushing corresponding early warning information and a regulatory scheme to a preset regulatory end.

Preferably, a determination rule of the regulatory scheme includes: classifying image information under the triggered early warning triggering condition based on risk types to obtain a data set under the risk types; and determining a risk level of the corresponding risk type based on the data set under the risk types one by one, and sequentially invoking the corresponding regulatory scheme for the determined risk level based on a preset risk knowledge graph.

Preferably, in the confined space monitoring scene, the method further includes: generating a self-check signal in the case where a feature value of the collected scene image is not equal to a preset value; sending the self-check signal to a feature adjustment unit to make the feature adjustment unit enter a self-check state, and adjusting a feature value of a flame self-check image until the feature value is equal to the preset value; generating an adjustment completion signal after the feature value of the flame self-check image is adjusted to the preset value; and sending the adjustment completion signal to the feature adjustment unit to cause the feature adjustment unit to enter a self-check completion status.

In the embodiment of the present disclosure, the feature value of the flame self-check image is an RGB value of each pixel point, the preset value is an RGB value of a single color, the preset value preferably adopts an RGB value of black, the RGB value of black can be used as a self-check operation and can simulate an alarm of an extinguishing scene of a furnace of a boiler, and when the feature value of a collected flame combustion image of the furnace is the RGB value of black during the operation of the boiler, it indicates that the furnace flame is extinguished and an alarm needs to be notified to an operator, and RGB values of other single colors can be used only as a self-check operation.

In this embodiment, if the RGB value of each pixel point of the collected flame self-check image is not 0 (the RGB value of black is 0), i.e., the flame self-check image is not a pure black image, the self-check operation is started to be performed.

The self-check signal is sent to the feature adjustment unit to make the feature adjustment unit enter the self-check state, and adjust the feature value of the flame self-check image until the feature value is equal to the preset value.

In this embodiment, the feature adjustment unit adjusts the feature value of the flame self-check image until the feature value is equal to the preset value, which may take the following manners:

First manner, in a software manner, the feature adjustment unit performs forced assignment on the RGB value of each pixel point of the flame self-check image, and modifies the RGB value of the pixel point of which the RGB value is not zero into zero, so as to make the RGB value of each pixel point of the flame self-check image be zero.

Second manner, in a hardware manner, the lens of the camera 1 is automatically blocked, and after the lens of the camera 1 is blocked, the collected flame self-check image is a black image. This manner is simple, and the adjustment error is small.

In this embodiment, it is preferable to adjust the feature value of the flame self-check image in the second manner until the feature value is equal to the preset value.

Preferably, the method further includes: retaining historical early warning information. The retaining includes: anchoring an abnormal image of image information determined to be the historical early warning information in an image sequence; positioning a specific abnormal position of a device in the anchored abnormal image, and slicing the abnormal image based on an abnormal position positioning result to obtain a plurality of sub-images; filtering background sub-images from the plurality of sub-images, taking the remaining sub-images as effective images, and storing the effective images into a preset image library; and in response to an access signal of the preset image library, pushing the effective images based on an access target.

In the embodiment of the present disclosure, in order to reduce the storage of target images, only the abnormal image is stored, and the corresponding abnormal image frame needs to be identified and extracted in video data. Based on this, as long as an abnormality is identified, anchoring a current frame of image is performed in video stream data, indicating that this image needs to be subsequently used as a storage target. During subsequent processing and storage, only images with anchor identifiers need to be identified, thereby reducing the number of images and avoiding excessive burden on a storage system.

Specifically, positioning the specific abnormal position of the device in the anchored abnormal image includes: taking an abnormal region boxed by a training result in the anchored image as a candidate abnormal position, and labeling the position of each candidate abnormal position to obtain labelled image information; pushing the labelled image information to a user end, and recovering confirmation information of the user based on the user end; determining or deleting the candidate abnormal positions based on the confirmation information to obtain image information in which abnormal position positioning is completed.

In the embodiment of the present disclosure, in the solution of the present disclosure, abnormality recognition is performed by a fault diagnosis model, and since the abnormality recognition is performed by feature extraction, the abnormal positions will be boxed based on the abnormal features. In the solution of the present disclosure, the training result is directly used to take the abnormal region boxed by the training result as the candidate abnormal position. However, the data is only the data automatically identified by the system, and may have a certain error, and in order to avoid the error situation, it is necessary to push the data to the user end for confirmation, and after the confirmation is passed, the accurate abnormal position positioning result is determined.

In order to avoid excessive information that the user needs to confirm, the workload of the user is increased. Preferably, because if an abnormality occurs in the device, the abnormality state within a certain period of time is the same, i.e., there may be little difference in other image frames attached to an abnormal image frame. When a confirmation image is pushed, only one piece of confirmation information needs to be pushed in one sampling period, thereby reducing the amount of image pushing and the workload of user confirmation.

Preferably, slicing the abnormal image based on the abnormal position positioning result to obtain the plurality of sub-images includes: binarizing an original image of the abnormal image to obtain a binarized image; performing edge detection in the binarized image, and outlining a contour of each region based on the edge detection result to obtain a substrate image; performing projection mapping on the image in which abnormal position positioning is completed and the substrate image to obtain a contour image of the abnormal region; and slicing the abnormal image based on the contour image of the abnormal region to obtain the plurality of sub-images.

In the embodiment of the present disclosure, in a refining and chemical heating furnace, a plurality of furnace nozzles are present in the furnace, and the furnace nozzles will produce flame. A confined space is inside the furnace, so its background is pure black. Under such simple background conditions, only the flame features of the furnace nozzles are changed. That is, the background is relatively single and the foreground is only a flame image. The solution of the present disclosure makes full use of this feature to distinguish the foreground and the background, and performs image slicing based on the distinguishing result. The existing slicing solutions tend to be based on regular size information for slicing. In order to ensure that stored data is effective data as much as possible, in the solution of the present disclosure, image slicing is performed directly based on the foreground (i.e., the abnormal region), the background is removed, and only foreground information is retained. When the user subsequently needs to extract effective information, the image fusion is performed directly based on single background information as the background of the extracted image, and the fused image is then pushed to the user. That is, only the foreground information is stored in the system and background information is stored as template information to ensure that a large amount of stored data does not have background information, thereby reducing the amount of data in each stored image.

Based on this, the solution of the present disclosure will identify the contour of the abnormal region, so that image slicing is performed based on the contour, deleting all invalid background information.

Specifically, slicing the abnormal image based on the contour image of the abnormal region to obtain the plurality of sub-images includes: taking all other regions than the contour image of the abnormal region as background regions; and slicing a current image based on the contour image of the abnormal region into corresponding abnormal region sub-images and background region sub-images.

All the background region sub-images are filtered, and the remaining abnormal region sub-images are taken as initial effective images; field-of-view information for the current image is recorded, wherein the field-of-view information includes viewing angle information and focal length information; establishing an association relationship between the initial effective images and the field-of-view information for the current image, and the initial effective images after the association is completed are taken as the effective images.

In the embodiment of the present disclosure, the corresponding background regions are different under different field-of-view conditions, and therefore, corresponding template information is preset for various field-of-view information, so that a template suitable for a current field of view can be extracted when image merging is subsequently performed, and it is ensured that image information pushed to the user, even if it is a merged image, is expected image information.

In the embodiment of the present disclosure, even if the amount of data is reduced, the storage system is still likely to be full. In order to relieve the pressure of the storage system, it is necessary to automatically clean data to avoid full storage. Therefore, when data is stored to a certain amount, a cleaning rule is triggered, and a portion of data that is stored for the longest time is automatically treated as cleaning data, and this portion of data is less likely to be recalled because it has been stored too long. This portion of data is compressed and encrypted, and stored in the cloud, and local data is deleted, thereby relieving the pressure on the local storage system. Subsequently, users may download data directly through the cloud even if there is a need for invocation, and the data is decompressed and is combined with the template to be pushed to the users. The users are enabled to query the data throughout the data lifecycle.

Preferably, during image collection, the method further includes: acquiring real-time image information of flames in target areas, and performing abnormality probability evaluation of flames states in the target areas based on the image information; locating target areas in which the abnormality probability is evaluated to be greater than a preset threshold to form an abnormal target area set; generating an attitude adjustment scheme for an array of image monitoring devices based on locations of the abnormal target areas in the abnormal target area set; and performing the attitude adjustment scheme to perform attitude adjustment of each image monitoring device in the array of the image monitoring devices.

In the embodiment of the present disclosure, an array of image collection devices is disposed in the furnace, and the image collection devices are respectively arranged at different positions for omnidirectional image collection in the furnace. Performing abnormal probability evaluation of the flame state of each furnace nozzle based on the image information includes: preprocessing the collected image to obtain preprocessed image information; performing flame region identification in the preprocessed image; performing three-dimensional rubbing based on pre-constructed furnace three-dimensional information and the identified flame regions, and identifying a serial number of a furnace nozzle to which each flame region belongs; and performing abnormality probability evaluation on the flames of the furnace nozzles one by one based on a pre-constructed abnormality recognition model to obtain an abnormality probability prediction result corresponding to each furnace nozzle.

In the embodiment of the present disclosure, since a plurality of image monitoring devices are arranged in the furnace, and the image monitoring devices are arranged at different positions, the corresponding field of view is greatly different when each image monitoring device performs image collection. During image collection from different angles, there may be a plurality of furnace nozzles within the field of view, but because of different arrangement positions, the positions of the furnace nozzles in different images are different. Based on this, how to correspond the determination result to the furnace nozzle when the abnormality determination is subsequently performed is a technical problem that needs to be solved.

Based on this, in the solution of the present disclosure, the image is first preprocessed, and flame localization is then performed in the preprocessed image. Specifically, image information is subjected to denoising processing to obtain denoised image information; the denoised image information is binarized to obtain a binarized image, and the binarized image is taken as the preprocessed image. Performing flame region identification in the preprocessed image includes: identifying a gray of each pixel point in the binarized image, and taking regions where pixel points of which grays are less than a preset gray threshold communicate with each other as background regions; and subtracting the background regions, performing region communication based on gray similarity in the remaining image information to obtain a plurality of independent calibration regions, and taking these calibration regions as flame regions.

In the embodiment of the present disclosure, in order to reduce the influence of noise on the image quality and avoid misidentifying image noise as flame information, before performing flame recognition, it is necessary to perform denoising processing on the image. The denoised image is then binarized. Image binarization is to set the gray values of pixel points on the image to 0 or 255, i.e., to present the entire image with an obvious black and white effect. There are differences in color, brightness, etc. of the original image, which will finally be distinguished by gray values on the binarized image. Since flame image collection is performed inside the furnace in the solution of the present disclosure, the background is pure black. In this case, the background color is relatively pure, and the gray difference will be large, in such a way that the flame region can be distinguished very simply, and quick localization of the flame region can be achieved. Since there are separate flames for different furnace nozzles, there will also be a plurality of identified flame regions, and each flame region corresponds to at least one furnace nozzle.

Performing three-dimensional rubbing based on pre-constructed furnace three-dimensional information and the identified flame regions, and identifying the serial number of the furnace nozzle to which each flame region belongs includes: determining an image monitoring device from which image information corresponding to the flame region identification result comes, and reading attitude information of the image monitoring device; determining field-of-view information of the corresponding image monitoring device based on the attitude information; performing three-dimensional rubbing in the pre-constructed furnace three-dimensional information based on the field-of-view information, and projecting image calibration information under the corresponding field of view; and calibrating the serial number of the furnace nozzle to which each flame region belongs for the image with a determined flame region identification result based on the image calibration information.

In the embodiment of the present disclosure, in order to realize the association of the flame regions with the furnace nozzles in the field-of-view information of different image monitoring devices, in the solution of the present disclosure, the three-dimensional rubbing is performed based on the furnace three-dimensional information, furnace nozzle information is reversely rubbed based on the collected images as invisible two-dimensional images. The orientation of the monitoring device determines its angle of view, while a focal length of the image monitoring device determines the size of its field of view. Reading the attitude information of the image monitoring device needs to simultaneously read orientation information and focal length information, and then image information corresponding to the size of the field of view under the corresponding field of view is simulated. The three-dimensional rubbing is performed based on the furnace three-dimensional information, furnace nozzle information under the field of view is found, and the serial number of the furnace nozzle is determined.

Preferably, the method further includes: constructing three-dimensional information of the furnace. The constructing includes: collecting design information of the refining and chemical heating furnace, and reading structural information of the furnace from the design information; and importing the structural information into MATLAB to obtain the three-dimensional information of the furnace.

Abnormality probability evaluation is performed on the flames of the furnace nozzles one by one based on the pre-constructed abnormality recognition model to obtain the abnormality probability prediction result corresponding to each furnace nozzle. The method further includes: constructing an abnormality recognition model. The constructing includes: acquiring historical image information of furnace nozzle flame, the historical image information includes normal flame image information and labeled abnormal flame image information; and taking the historical image information as a training sample, and performing model training in a pre-neural network to obtain the abnormality recognition model.

Further, furnace nozzles of which the abnormality probability is evaluated to be greater than a preset threshold are located to form an abnormal furnace nozzle set.

In particular, after the abnormality probability evaluation result of each furnace nozzle is obtained, the abnormality evaluation result of each furnace nozzle is compared with the preset threshold, and when it is determined that the abnormality probability evaluation result of the furnace nozzle is greater than the preset threshold, it indicates that there is abnormal combustion in the furnace nozzle, and the furnace nozzle is defined as an abnormal furnace nozzle.

Preferably, because there are a plurality of image monitoring devices within the furnace, it is possible that the plurality of image monitoring devices simultaneously have flame image information of the same furnace nozzle. Because of the image collection from different attitudes, the flame state of the same furnace nozzle may differ in the image information of different image monitoring devices. That is, it is possible that the same furnace nozzle is determined to be abnormal and normal at the same time. In this case, as long as a certain furnace nozzle is determined to be abnormal in the image of any one of the image monitoring devices, in order to avoid missing the abnormal situation, even if the furnace nozzle is determined to be normal in the images of other image monitoring devices, the furnace nozzle still needs to be furnace determined to be an abnormal furnace nozzle.

Further, an attitude adjustment scheme for an array of image monitoring devices is generated based on the locations of the abnormal furnace nozzles in the abnormal furnace nozzle set.

The serial numbers of furnace nozzles with an abnormality probability of greater than the preset threshold are identified, and position information of each abnormal furnace nozzle is located in the design information of the refining and chemical heating furnace based on the determined serial number of the furnace nozzles; priority information of each image monitoring device with respect to each abnormal furnace nozzle is identified in a preferred image monitoring device comparison table based on the position information of each abnormal furnace nozzle, wherein the higher the priority, the more excellent the field of view of image information of the corresponding abnormal furnace nozzle acquired by the corresponding image monitoring device; an image monitoring device is assigned for each abnormal furnace nozzle in the array of image monitoring devices based on the priority information of each image monitoring device with respect to each abnormal furnace nozzle, each abnormal furnace nozzle being assigned with at least two image monitoring devices; each image monitoring device generates the attitude adjustment scheme for the corresponding abnormal furnace nozzle based on the assignment result.

In the embodiment of the present disclosure, since the image monitoring devices are arranged at different positions, the optimal viewing angle of each image monitoring device is different. Even though some furnace nozzles may appear within the field of view of a certain image monitoring device, their image information is distorted to a certain extent because they may deviate greatly from the optimal viewing angle of the device. In this case, the accuracy of monitoring of the flame states corresponding to the furnace nozzles is not guaranteed based on the image monitoring device. Based on this, in the solution of the present disclosure, when the image monitoring device is set, the corresponding preferred image monitoring device comparison table is stored. When it is subsequently necessary to perform intensive supervision on the abnormal furnace nozzle, it is necessary to select a preferred image monitoring device for image collection, to ensure that the abnormal furnace nozzle is within the optimal viewing angle of the assigned image monitoring device, avoid image distortion, and improve monitoring precision.

Preferably, generating, by each image monitoring device, the attitude adjustment scheme for the corresponding abnormal furnace nozzle based on the assignment result includes: if one image monitoring device is assigned to a plurality of abnormal furnace nozzles at the same time, determining a sequence of supervised operation of the image monitoring device based on the priority between the image monitoring device and each abnormal furnace nozzle, the higher the priority, the more front the sequence of supervised operation of the image monitoring device with respect to the abnormal furnace nozzle; if one image monitoring device is assigned to a plurality of abnormal furnace nozzles at the same time, and the priority between the image monitoring device and at least two of the abnormal furnace nozzles is the same, comparing the abnormal probabilities of the abnormal furnace nozzles of the same priority, the larger the abnormal probability, the higher the priority, the more front the sequence of supervised operation of the image monitoring device with respect to the abnormal furnace nozzles; and based on the determined sequence of supervised operation, generating a field-of-view alignment order and a focusing scheme for the image monitoring devices, and taking the field-of-view alignment order and the focusing scheme as the attitude adjustment scheme.

Preferably, generating the field-of-view alignment order and the focusing scheme for the image monitoring devices based on the determined sequence of supervised operation includes: generating a sequential alignment scheme for each image monitoring device with respect to each abnormal furnace nozzle based on the determined sequence of supervised operation, and generating an alignment timing table based on the sequential alignment scheme; and determining distance information of the abnormal furnace nozzle corresponding to each alignment moment to the assigned image monitoring device, and determining focusing information at each alignment moment based on the distance information, and supplementing the focusing information into the alignment timing table in sequence to obtain the corresponding field-of-view alignment order and the corresponding focusing scheme.

In the embodiment of the present disclosure, in the solution of the present disclosure, in order to achieve intensive supervision of the abnormal furnace nozzles, in addition to selecting the image monitoring devices with the best viewing angle, in order to avoid the interference of the flames of other furnace nozzles, it is ensured that only flame information of a target furnace nozzle existing within the field of view is a desired state. Based on this, in the solution of the present disclosure, when the intensive supervision is performed, the image monitoring devices will be automatically aligned and focused, and the unique monitoring of the abnormal furnace nozzles is achieved, and the monitoring accuracy is guaranteed. Since it is not possible for different image monitoring devices to serve only one furnace nozzle, it is necessary to generate a corresponding timing table, and perform sequential intensive supervision based on the priority or the abnormality probability, while ensuring the precision, reducing the overall delay of the scheme, and avoiding the omission of critical abnormalities.

Further, the attitude adjustment scheme is performed to perform attitude adjustment of each image monitoring device in the array of the image monitoring devices.

Specifically, based on the field-of-view alignment order and the focusing scheme, the attitude adjustment of the image monitoring devices is synchronously performed, and the monitoring of all abnormal furnace nozzles is realized, thereby realizing secondary intensive supervision after being identified as a suspected abnormality, avoiding false alarms due to misidentification.

Preferably, the method further includes: after attitude adjustment of each image monitoring device is completed, increasing the sampling frequency on the basis of the original sampling frequency, and finishing flame image collection of the corresponding abnormal furnace nozzle in a preset period as a supervision image; performing abnormality probability evaluation again on the supervision image, outputting alarm information if the abnormality probability evaluation result is still greater than the preset threshold; otherwise, correcting the abnormal furnace nozzle to a normal furnace nozzle.

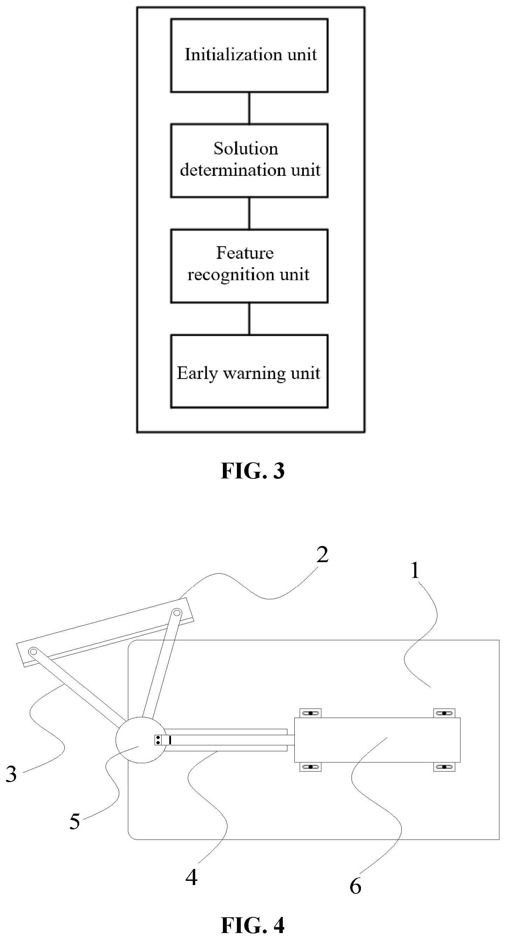

FIG. 3 is a system structure diagram of a self-adaptive flame monitoring system for an industrial area according to an embodiment of the present disclosure. As shown in FIG. 3, an embodiment of the present disclosure provides a self-adaptive flame monitoring system for an industrial area, including: a feature recognition unit, configured to collect a scene image in a flame monitoring scene, and identify flame features based on a flame monitoring solution corresponding to a current flame scene; and an early warning unit, configured to determine early warning triggering conditions based on the identified flame features, and execute a corresponding early warning solution based on a triggered early warning triggering condition, wherein when the flame monitoring scene is an open space monitoring scene, false alarm screening is performed on part of identification results of adaptive screening based on differences in flame features of a plurality of frames of images before determining the early warning triggering conditions.

Preferably, the system further includes an initialization unit configured to perform system initialization in response to an initialization request signal, and determine a flame monitoring scene based on a system initialization result, wherein the flame monitoring scene includes an open space monitoring scene and a confined space monitoring scene; and a solution determination unit configured to select a corresponding flame monitoring solution based on the flame monitoring scene.

The feature adjustment unit is configured to: receive a self-check signal emitted by a camera 1, enter a self-check state according to the self-check signal, and adjust a feature value of a flame self-check image until the feature value is equal to a preset value in the self-check state; or receive an adjustment completion signal emitted by the camera 1, and enter a self-check completion status according to the adjustment completion signal.

The system further includes: a self-check unit including a camera 1 and a feature adjustment unit. Wherein, the camera includes: an acquisition module, configured to acquire a flame self-check image of a furnace; a first generating module, configured to generate a self-check signal in the case where it is determined that a feature value of the flame self-check image is not equal to a preset value; a first sending module, configured to send the self-check signal to the feature adjustment unit to make the feature adjustment unit enter a self-check state, and adjust the feature value of the flame self-check image until the feature value is equal to the preset value; a second generating module, configured to generate an adjustment completion signal after the feature value of the flame self-check image is adjusted to the preset value; and a second sending module configured to send the adjustment completion signal to the feature adjustment unit to cause the feature adjustment unit to enter a self-check completion status.

As shown in FIG. 4, the feature adjustment unit includes: a baffle 2 configured to block a lens of the camera 1 to adjust the feature value of the flame self-check image collected by the camera 1; a controller configured to receive the self-check signal and the adjustment completion signal, and generate a first control instruction according to the self-check signal and generate a second control instruction according to the adjustment completion signal; and an actuator installed on an outer side wall of the camera 1, and configured to receive the first control instruction and the second control instruction which are issued by the controller, control the baffle 2 to turn over from an initial position onto a surface of the lens of the camera 1 according to the first control instruction, and control the baffle 2 to turn over from the surface of the lens of the camera 1 to the initial position according to the second control instruction. As further optimization of this embodiment, a mounting chamber 7 is provided with a protrusion 11 configured to limit the amount of rotation of a support rod 3 so that the amount of rotation of the support rod 3 is maintained at 90°.

Preferably, the actuator includes: a linear module and a rotating assembly, wherein the linear module is installed on the outer side wall of the camera 1, the support rod 3 is connected to the baffle 2, an end, away from the baffle 2, of the support rod 3 is connected to the rotating assembly, the rotating assembly is configured to drive the support rod 3 to rotate, the rotating assembly is mounted on the linear module, and the linear module is configured to drive the rotating assembly to move to change a rotating point of the support rod 3.

Preferably, the linear module includes a sliding groove 4 formed in the outer side wall of the camera 1, a slider 5 is slidably connected in the sliding groove 4, a push rod 6 is also disposed on the outer side wall of the camera 1, and a telescopic end of the push rod 6 is connected to the slider 5.

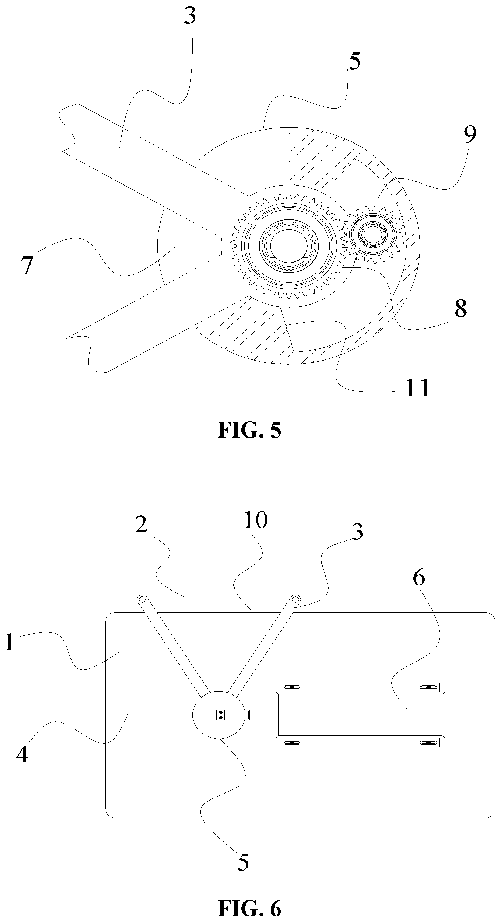

As shown in FIG. 5, preferably, the rotating assembly includes the mounting chamber 7 disposed in the slider 5, the support rod 3 is hinged in the mounting chamber 7, a driven gear 8 is disposed on a hinge shaft of the support rod 3, and a driving motor is also disposed in the mounting chamber 7, and a driving gear 9 is connected to a driving end of the driving motor, and the driving gear 9 is meshed with the driven gear 8.

As shown in FIG. 6, preferably, a ring of rubber pad 10 is disposed on an edge of an inner side of the baffle 2.

An embodiment of the present disclosure also provides a computer-readable storage medium, having stored thereon instructions that, when run on a computer, cause the computer to perform the self-adaptive flame monitoring method for an industrial area described above.

Those skilled in the art will appreciate that all or a part of the steps in the method for implementing the above embodiments may be completed by instructing related hardware through a program, the program is stored in a storage medium and includes a plurality of instructions configured to cause a single chip microcomputer, a chip or a processor to perform all or part of the steps of the method of the embodiments of the present disclosure. The aforementioned storage medium includes various media in which program codes can be stored, such as a USB flash disk, a mobile hard disk, a Read-Only Memory (ROM), a Random Access Memory (RAM), a magnetic disk, or an optical disk.

Optional embodiments of the present disclosure are described in detail above in conjunction with the accompanying drawings. However, the embodiments of the present disclosure are not limited to the specific details in the above embodiments, and many simple variations can be made to the technical solutions of the embodiments of the present disclosure within the scope of the technical idea of the embodiments of the present disclosure, and these simple variations all belong to the protection scope of the embodiments of the present disclosure. In addition, it should be noted that the specific technical features described in the above detailed description can be combined in any suitable manner without contradiction. In order to avoid unnecessary repetition, various possible combinations will not be described separately in the embodiments of the present disclosure.

In addition, any combination between various different embodiments of the present disclosure may be made, and as long as they do not depart from the idea of the embodiments of the present disclosure, they should also be considered as the contents disclosed in the embodiments of the present disclosure.

## Claims

1. A self-adaptive flame monitoring method for an industrial area, comprising:

   collecting a scene image in a flame monitoring scene, and identifying flame features based on a flame monitoring solution corresponding to a current flame scene; and
   determining early warning triggering conditions based on the identified flame features, and executing a corresponding early warning solution based on a triggered early warning triggering condition,
   wherein, when the flame monitoring scene is an open space monitoring scene, false alarm screening is performed on part of identification results of adaptive screening based on differences in flame features of a plurality of frames of images before determining the early warning triggering conditions.

2. The method according to claim 1, wherein before identifying the flame features based on the flame monitoring solution corresponding to the current flame scene, the method further comprises:

   performing system initialization, comprising:

   acquiring information of a scene in which an image collection device is located, wherein the information of the scene comprises one or more of field-of-view information of the image collection device, temperature information of the scene, object characteristic information within the scene, and scene information entered by a user; and
   performing system initialization based on the information of the scene, and determining the flame monitoring scene; and

   selecting, based on the flame monitoring scene, the corresponding flame monitoring solution, comprising:

   determining that a current flame monitoring solution is a fire monitoring solution in the case where the flame monitoring scene is an open space monitoring scene; and
   determining that the current flame monitoring solution is a furnace flame status monitoring solution in the case where the flame monitoring scene is a confined space monitoring scene.

3. The method according to claim 1 or 2, wherein when the current flame monitoring solution is the fire monitoring solution, the scene image comprises video image information and infrared image information; and
   the method further comprises:
   training a fire identification model, comprising:

   acquiring historical video information containing a fire scene, and performing frame extraction on the historical video information, and taking image information after the frame extraction as an initial sample set;
   preprocessing each image in the initial sample set, and performing flame feature labeling after the preprocessing to obtain a labeled sample set;
   performing data enhancement processing on the labeled sample set, and splitting the labeled sample set after the data enhancement into a training set and a validation set;
   performing model training based on the training set and a selected image recognition algorithm to obtain an initial model; and

verifying the initial model based on the verification set, and using the verified model as the fire identification model.

4. The method according to claim 1, wherein before identifying the flame features based on the scene image, the method further comprises:

determining an image recognition algorithm for the flame features of the scene image based on a selected flame monitoring solution,

wherein the image recognition algorithm comprises one or more of a maximum between-class variance method, a Boolean variable method, R-CNN, Fast R-CNN, faster R-CNN, mask R-CNN, YOLO v4, YOLO v5, YOLO v7, YOLO v8, and SSD.

5. The method according to any one of claims 1-4, wherein acquiring the identified flame features based on the scene image comprises:

performing frame extraction on the video image information to obtain a plurality of image frames to form an image set; and

taking the image set as input parameters for a pre-trained fire identification model, and performing model training to obtain the flame features,

wherein the flame features comprise one or more of a flame location, a flame size, a flame color, and a smoke feature.

6. The method according to any one of claims 1-5, wherein determining the early warning triggering conditions based on the identified flame features comprises:

determining that a first fire condition is triggered in the case where there are recognizable flame features;

determining that a second fire condition is triggered in the case where the flame features meet preset fire flame features, wherein the fire flame features comprise a coupling feature of one or more of a flame size feature, a flame location feature, a flame color feature, and a smoke feature;

determining that a third fire condition is triggered in the case where the infrared image information identifies the flame features;

determining that a fire early warning triggering condition is met when the first fire condition, the second fire condition and the third fire condition are triggered simultaneously; and

pushing scene image information to a user end when the second fire condition is triggered and the third fire condition is not triggered, or the second fire condition is not triggered and the third fire condition is triggered when determining that the first fire condition is triggered, and determining whether the fire early warning triggering condition is met based on user confirmation information.

7. The method according to any one of claims 1-6, wherein performing false alarm screening on part of identification results of adaptive screening based on differences in flame features of the plurality of frames of images comprises:

identifying a suspected misjudgment image in image information that meets the fire early warning triggering condition within a predetermined period to form a suspected misjudgment image set;

performing false alarm screening on the image information in the misjudgment image set one by one, wherein false alarm types comprise one or more of static false alarm, dynamic rule movement false alarm, and minimal fuzzy false alarm; and

performing each preset false alarm type screening rule in sequence, performing false alarm screening on each suspected misjudgment image, outputting image information after false alarm screening, and repeatedly determining the early warning triggering condition based on the image information after the false alarm screening, wherein the preset false alarm type screening rules comprise one or more of a static false alarm screening rule, a dynamic rule movement false alarm screening rule and a minimal fuzzy false alarm screening rule.

8. The method according to claim 7, wherein the static false alarm screening rule comprises:

extracting other image frames of the misjudgment images within the predetermined period, together with a current misjudgment image to form a misjudgment and research and judgment set; and

identifying an inter-frame drift amount between adjacent image frames in the misjudgment and research and judgment set, and comparing the inter-frame drift amount with a preset inter-frame drift threshold, and in the case where an inter-frame drift amount between consecutive n adjacent image frames is less than the preset inter-frame drift threshold, determining that there is a static false alarm for the current misjudgment image, and false alarm screening needs to be performed,

wherein, the inter-frame drift amount is a maximum offset of a recognition box, an offset of a center point of the recognition box or an offset of a centroid of a segmented target.

9. The method according to claim 7, wherein the dynamic rule movement false alarm screening rule comprises:

extracting other image frames of the misjudgment images within the predetermined period, together with a current misjudgment image to form a misjudgment and research and judgment set; and

identifying a recognition box area relationship value between adjacent image frames in the misjudgment and research and judgment set, and comparing the recognition box area relationship value with a preset recognition box area relationship value threshold, and in the case where a recognition box area relationship value between consecutive n adjacent image frames is less than the recognition box area relationship value, determining that there is dynamic rule movement false alarm for the current misjudgment image, and false alarm screening needs to be performed,

wherein, the recognition box area relationship value is a recognition box area difference value or a recognition box area ratio value.

10. The method according to claim 7, wherein the minimal fuzzy false alarm screening rule comprises:

extracting other image frames of the misjudgment images within the predetermined period, together with a current misjudgment image to form a misjudgment and research and judgment set; and

identifying a recognition box area value for each image frame in the misjudgment and research and judgment set, and comparing the recognition box area value for each image frame with a preset pixel area limitation threshold of a recognition box, and in the case where the recognition box area values of consecutive n image frames are less than the preset pixel area limitation threshold of the recognition box, determining that there is minimal fuzzy false alarm for the current misjudgment image, and false alarm screening needs to be performed.

11. The method according to any one of claims 1-10, wherein when the current flame monitoring solution is the furnace flame status monitoring solution, the scene image comprises:

flame video image information and/or infrared image information of each furnace nozzle; and

acquiring the identified flame features based on the scene image comprises:

identifying flame video image and/or infrared image information of each furnace nozzle by utilizing a plurality of image recognition algorithms to obtain a flame morphology identification result corresponding to each furnace nozzle; and

using the flame morphology identification result corresponding to each furnace nozzle as the identified flame features.

12. The method according to any one of claims 1-11, wherein identifying the flame video image and/or infrared image information of each furnace nozzle by utilizing the plurality of image recognition algorithms to obtain the flame morphology identification result corresponding to each furnace nozzle comprises:

acquiring a plurality of frames of images in an actual combustion process inside a heating furnace, wherein the plurality of frames of images are obtained by decompressing video information in the actual combustion process inside the heating furnace;

for each frame of image, using different image recognition algorithms to respectively identify the frame of image, obtaining a flame morphology of each frame of image under each image recognition algorithm, and determining feature parameters of a flame morphology under each image recognition algorithm based on the flame morphology of each frame of image under each image recognition algorithm; and

performing flame morphology correction based on feature parameters of the flame morphology under each image recognition algorithm to obtain a corrected flame morphology.

13. The method according to any one of claims 1-12, wherein performing flame morphology correction based on feature parameters of the flame morphology under each image recognition algorithm to obtain the corrected flame morphology, comprising:

determining a flame morphology error value based on feature parameters of the flame morphology under the maximum between-class variance method and feature parameters of the flame morphology under the Boolean variable method;

in the case where the flame morphology error value is less than a preset error threshold, taking the flame morphology under the Boolean variable method as the corrected flame morphology;

otherwise, performing flame morphology recognition again based on the maximum between-class variance method and the Boolean variable method until the flame morphology error value of both is less than the preset error threshold,

wherein, the feature parameters of the flame morphology comprise: a flame height, a flame width, a flame area, a flame color, a flame pulsation frequency and a flame inclination; and

wherein, the early warning triggering conditions comprise: a furnace nozzle extinguishing early warning condition, a furnace nozzle burning efficiency early warning condition and a furnace nozzle abnormal burning early warning condition.

14. The method according to any one of claims 1-13, wherein a trigger rule for the furnace nozzle extinguishing early warning condition comprises:

acquiring image information simultaneously transmitted back by the image collection devices of the same furnace nozzle at different viewing angles;

determining whether there are the flame features for the corresponding furnace nozzle based on the image information simultaneously transmitted back by the image collection devices to obtain a plurality of flame morphology identification results;

in the case where the plurality of flame morphology identification results are all that the furnace nozzle is extinguished, determining that the result is that the furnace nozzle is extinguished;

in the case where the plurality of flame morphology identification results are all that the furnace nozzle is not extinguished, determining that the result is that the furnace nozzle is not extinguished;

in the case where the plurality of flame morphology identification results are not consistent, determining the plurality of flame morphology identification results to identify an abnormal flame morphology identification result and a non-abnormal flame morphology identification result;

determining whether the furnace nozzle is extinguished according to the abnormal flame morphology identification result and the non-abnormal flame morphology identification result; and

traversing all the furnace nozzles to obtain the extinguishing situation of each furnace nozzle, and in the case where the number of extinguished furnace nozzles is greater than a preset number threshold of extinguished furnace nozzles, determining that the furnace nozzle extinguishing early warning condition is triggered.

15. The method according to any one of claims 1-14, wherein a trigger rule for the furnace nozzle burning efficiency early warning condition comprises:

identifying an actual flame area and an actual combustion area based on the flame area;

calculating the flame combustion efficiency according to the actual flame area and the actual combustion area; and

determining that the furnace nozzle burning efficiency early warning condition is triggered when the flame combustion efficiency is lower than the expected combustion efficiency.

16. The method according to any one of claims 1-14, wherein a trigger rule for the furnace nozzle abnormal burning early warning condition comprises:

respectively determining error values between the flame width, the flame area, the flame pulsation frequency, the flame color and the flame inclination and corresponding preset parameters;

determining whether there is an abnormality in each comparison relationship based on each error value and a preset error threshold under the corresponding comparison relationship; and

determining that the furnace nozzle abnormal burning early warning condition is triggered when the number of comparison relationships in which abnormalities exist is greater than a preset number of comparison relationships.

17. The method according to any one of claims 1-16, wherein calculating the flame combustion efficiency according to the actual flame area and the actual combustion area comprises:

acquiring combustion parameters of a target heating furnace;

calculating a furnace characteristic parameter $\pi_f$ and an air characteristic parameter $\pi_a$ according to the combustion parameters;

calculating a flame combustion area of the target heating furnace at a combustion efficiency of 100% according to the combustion parameters, the furnace characteristic parameter $\pi_f$ and the air characteristic parameter $\pi_a$;

obtaining a normal combustion area of the target heating furnace based on the flame combustion area;

determining the overall combustion efficiency based on a ratio of the actual flame area to the normal combustion area;

determining the combustion efficiency based on a ratio of the actual combustion area to the normal combustion area; and

taking the overall combustion efficiency and the combustion efficiency as the flame combustion efficiency.

18. The method according to claim 1 or 2, wherein in the confined space monitoring scene, the method further comprises:

generating a self-check signal in the case where a feature value of the collected scene image is not equal to a preset value;

sending the self-check signal to a feature adjustment unit to make the feature adjustment unit enter a self-check state, and adjusting a feature value of a flame self-check image until the feature value is equal to the preset value;

generating an adjustment completion signal after the feature value of the flame self-check image is adjusted to the preset value; and

sending the adjustment completion signal to the feature adjustment unit to cause the feature adjustment unit to enter a self-check completion status.

19. The method according to claim 1, wherein the early warning triggering conditions comprise:

a fire early warning triggering condition in the open space monitoring scene; and

a furnace nozzle extinguishing early warning condition, a furnace nozzle burning efficiency early warning condition and a furnace nozzle abnormal burning early warning condition in the confined space monitoring scene; and

executing the corresponding early warning solution based on the triggered early warning triggering condition comprises:

in the case where the triggered early warning triggering condition is the fire early warning triggering condition, performing a fire extinguishing operation in conjunction with a fire water sprinkler system being started while outputting a fire alarm signal; and

in the case where the triggered early warning triggering condition is the furnace nozzle extinguishing early warning condition, the furnace nozzle burning efficiency early warning condition or the furnace nozzle abnormal burning early warning condition, pushing corresponding early warning information and a regulatory scheme to a preset regulatory end.

20. The method according to claim 1, further comprising:

retaining historical early warning information, comprising:

anchoring an abnormal image of image information determined to be the historical early warning information in an image sequence;

positioning a specific abnormal position of a device in the anchored abnormal image, and slicing the abnormal image based on an abnormal position positioning result to obtain a plurality of sub-images; and

filtering background sub-images from the plurality of sub-images, taking the remaining sub-images as effective images, and storing the effective images into a preset image library; and

in response to an access signal of the preset image library, pushing the effective images based on an access target.

21. The method according to claim 1, wherein during image collection, the method further comprises:

acquiring real-time image information of flames in target areas, and performing abnormality probability evaluation of flames states in the target areas based on the image information;

locating target areas in which the abnormality probability is evaluated to be greater than a preset threshold to form an abnormal target area set;

generating an attitude adjustment scheme for an array of image monitoring devices based on locations of the abnormal target areas in the abnormal target area set; and

performing the attitude adjustment scheme to perform attitude adjustment of each image monitoring device in the array of the image monitoring devices.

22. A self-adaptive flame monitoring system for an industrial area, comprising:

a feature recognition unit, configured to collect a scene image in a flame monitoring scene, and identify flame features based on a flame monitoring solution corresponding to a current flame scene; and

an early warning unit, configured to determine early warning triggering conditions based on the identified flame features, and execute a corresponding early warning solution based on a triggered early warning triggering condition,

when the flame monitoring scene is an open space monitoring scene, false alarm screening is performed on part of identification results of adaptive screening based on differences in flame features of a plurality of frames of images before determining the early warning triggering conditions.

23. The system according to claim 22, further comprising:

a self-check unit, comprising a camera and a feature adjustment unit,
wherein, the camera comprises:

an acquisition module, configured to acquire a flame self-check image of a furnace;

a first generating module, configured to generate a self-check signal in the case where it is determined that a feature value of the flame self-check image is not equal to a preset value;

a first sending module, configured to send the self-check signal to the feature adjustment unit to make the feature adjustment unit enter a self-check state, and adjust the feature value of the flame self-check image until the feature value is equal to the preset value;

a second generating module, configured to generate an adjustment completion signal after the feature value of the flame self-check image is adjusted to the preset value; and

a second sending module, configured to send the adjustment completion signal to the feature adjustment unit to cause the feature adjustment unit to enter a self-check completion status.

24. The system according to claim 22 or 23, wherein the feature adjustment unit comprises:

a baffle, configured to block a lens of the camera to adjust the feature value of the flame self-check image collected by the camera;

a controller, configured to receive the self-check signal and the adjustment completion signal, generate a first control instruction according to the self-check signal and generate a second control instruction according to the adjustment completion signal; and

an actuator, installed on an outer side wall of the camera, and configured to receive the first control instruction and the second control instruction which are issued by the controller, control the baffle to turn over from an initial position onto a surface of the lens of the camera according to the first control instruction, and control the baffle to turn over from the surface of the lens of the camera to the initial position according to the second control instruction.

25. A computer-readable storage medium, having stored thereon instructions that, when run on a computer, cause the computer to perform the self-adaptive flame monitoring method for an industrial area according to any one of claims 1-21.

26. An electronic device, comprising: a processor and a memory, wherein the memory stores machine-readable instructions that can be executed by the processor, and the machine-readable instructions, when executed by the processor, implement the self-adaptive flame monitoring method for an industrial area according to any one of claims 1-21.

```
                                                                    S10
┌─────────────────────────────────────────────────────────────────────┐
│ In response to an initialization request signal, perform system       │
│ initialization, and determine a flame monitoring scene on the basis   │
│ of the system initialization result                                   │
└─────────────────────────────────────────────────────────────────────┘
                                     │
                                     ▼                              S20
┌─────────────────────────────────────────────────────────────────────┐
│ Select a corresponding flame monitoring solution on the basis of the  │
│ flame monitoring scene                                                │
└─────────────────────────────────────────────────────────────────────┘
                                     │
                                     ▼                              S30
┌─────────────────────────────────────────────────────────────────────┐
│  Execute the flame monitoring solution, collect a scene image in the  │
│  flame monitoring scene, and identify flame features on the basis of  │
│  the scene image                                                      │
└─────────────────────────────────────────────────────────────────────┘
                                     │
                                     ▼                              S40
┌─────────────────────────────────────────────────────────────────────┐
│ On the basis of the identified flame features, perform early warning  │
│ triggering conditiondeterminnation, and execute a corresponding early │
│ warning solution on the basis of a triggered early warning triggering │
│ condition                                                             │
└─────────────────────────────────────────────────────────────────────┘
```

**FIG. 1**

S301

Performing static false alarm screening

S302

Performing dynamic rule movement false alarm screening

S303

Performing minimal fuzzy false alarm screening

**FIG. 2**

**FIG. 3**

**FIG. 4**

**FIG. 5**

**FIG. 6**

## INTERNATIONAL SEARCH REPORT

| International application No. |
|---|
| **PCT/CN2024/118264** |

**A.  CLASSIFICATION OF SUBJECT MATTER**

G06V20/40(2022.01)i

According to International Patent Classification (IPC) or to both national classification and IPC

**B.  FIELDS SEARCHED**

Minimum documentation searched (classification system followed by classification symbols)

IPC:G06V G06T

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 场景, 封闭, 工业, 户外, 环境, 火, 火炬, 火苗, 火焰, 火灾, 监测, 检测, 警告, 决策, 开放, 空间, 宽度, 炉, 炉膛, 密闭, 面积, 熄灭, 判别, 判定, 判断, 燃烧器, 识别, 视场, 温度, 虚警, 颜色, 异常, 预警, scene, closed, industrial, environment, torch, fire, flame, detect+, monitor+, warn+, decision, decid+, identify+, open, width, area, burn???, out, stove?, burner?, judg+, view, temperature, false, alarm, colo?r

**C.  DOCUMENTS CONSIDERED TO BE RELEVANT**

| Category* | Citation of document, with indication, where appropriate, of the relevant passages | Relevant to claim No. |
|---|---|---|
| X | CN 113299034 A (LIAONING SINODOM SECURITY TECHNOLOGY CO., LTD.) 24 August 2021 (2021-08-24)<br>description, paragraphs 59-101 and 108-116 | 1-5, 18, 20-26 |
| X | CN 101373553 A (ZHEJIANG SCI-TECH UNIVERSITY) 25 February 2009 (2009-02-25)<br>description, page 1, paragraphs 2-4, and pages 6-7 | 1-5, 18, 20-26 |
| X | CN 103116746 A (UNIVERSITY OF SCIENCE AND TECHNOLOGY OF CHINA) 22 May 2013 (2013-05-22)<br>description, paragraphs 93-125 | 1, 22 |
| Y | CN 113299034 A (LIAONING SINODOM SECURITY TECHNOLOGY CO., LTD.) 24 August 2021 (2021-08-24)<br>description, paragraphs 59-101 and 108-116 | 6-17, 19 |
| Y | CN 112133052 A (LING'AO NUCLEAR POWER CO., LTD. et al.) 25 December 2020 (2020-12-25)<br>description, paragraphs 86-182 | 6-17 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 November 2024** | **23 December 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 779 587 A1**

## INTERNATIONAL SEARCH REPORT

<table>
<tr><td colspan="3">International application No.<br>**PCT/CN2024/118264**</td></tr>
</table>

**C.      DOCUMENTS CONSIDERED TO BE RELEVANT**

| Category* | Citation of document, with indication, where appropriate, of the relevant passages | Relevant to claim No. |
|---|---|---|
| Y | JP H0313715 A (SUMITOMO ELECTRIC INDUSTRIES LTD. et al.) 22 January 1991 (1991-01-22)<br>     description, pages 75-79, and figure 1 | 11-17, 19 |
| A | JP 2006275692 A (SUMITOMO CHEMICAL CO., LTD.) 12 October 2006 (2006-10-12)<br>     entire document | 11-19 |
| A | CN 110210554 A (GUANGZHOU AODUN INTELLIGENT TECHNOLOGY CO., LTD.) 06 September 2019 (2019-09-06)<br>     entire document | 1-26 |
| A | CN 110443969 A (CHINA MOBILE (SUZHOU) SOFTWARE TECHNOLOGY CO., LTD. et al.) 12 November 2019 (2019-11-12)<br>     description, paragraphs 63-70 | 1-26 |

Form PCT/ISA/210 (second sheet) (July 2022)

**INTERNATIONAL SEARCH REPORT**
Information on patent family members

International application No.

**PCT/CN2024/118264**

| Patent document cited in search report | | | Publication date (day/month/year) | Patent family member(s) | | | Publication date (day/month/year) |
|---|---|---|---|---|---|---|---|
| CN | 113299034 | A | 24 August 2021 | CN | 113299034 | B | 31 January 2023 |
| CN | 101373553 | A | 25 February 2009 | CN | 101373553 | B | 16 June 2010 |
| CN | 103116746 | A | 22 May 2013 | CN | 103116746 | B | 03 August 2016 |
| CN | 112133052 | A | 25 December 2020 | CN | 112133052 | B | 20 September 2022 |
| JP | H0313715 | A | 22 January 1991 | JP | 2544807 | B2 | 16 October 1996 |
| JP | 2006275692 | A | 12 October 2006 | | None | | |
| CN | 110210554 | A | 06 September 2019 | | None | | |
| CN | 110443969 | A | 12 November 2019 | CN | 110443969 | B | 04 June 2021 |

Form PCT/ISA/210 (patent family annex) (July 2022)